# EUROPÄISCHE PATENTANMELDUNG

(11) **EP 1 772 248 A1**
(43) Veröffentlichungstag der Anmeldung: **11.04.2007**
(21) Anmeldenummer: 06024675.8
(22) Anmeldetag: 01.09.2003
(51) Int. Cl.: B29C 45/16, A46B 5/02, A46B 7/04, A46B 15/00, A46D 3/00, A61C 17/34

(54) **Zahnbürste**

(30) Priorität: 27.09.2002 DE 10245086
(62) Teilanmeldung aus: 03757770.7
(71) Anmelder: Trisa Holding AG, 6234 Triengen (CH)
(72) Erfinder: Pfenniger, Philipp, 6234 Triengen (CH); Fischer, Franz, 6234 Triengen (CH); Huber, Beat, 6233 Büron (CH)
(74) Vertreter: Schaad, Balass, Menzl & Partner AG

(57) **Zusammenfassung**

Die Erfindung betrifft eine Zahnbürste mit einem einen Griffbereich (10), einen Kopfbereich (14) und einen zwischen dem Griffbereich (10) und dem Kopfbereich (14) gelegenen Halsbereich (12) umfassenden Körper (16, 18) und mit zumindest teilweise innerhalb des Körpers (16, 18) angeordneten Funktionsbauteilen, die eine elektrisch betriebene Funktionseinheit (22, 22') und eine einen Energiespeicher (24) aufweisende elektrische Versorgungseinrichtung (26) für die Funktionseinheit (22, 22') umfassen, bei dem der Körper aus zumindest einer als Festigkeitsträger dienenden Hartkomponente (16) sowie wenigstens einer Weichkomponente (18) im Spritzgiessverfahren hergestellt wird, und wenigstens einige der Funktionsbauteile während der Herstellung des Körpers (16, 18) zumindest teilweise direkt mit dem die Weichkomponente (18) bildenden Kunststoff umspritzt werden.

## Beschreibung

Die Erfindung betrifft eine elektische Zahnbürste mit einem einen Griffbereich, einen Kopfbereich und einen zwischen dem Griffbereich und dem Kopfbereich gelegenen Halsbereich umfassenden Körper und mit zumindest teilweise innerhalb des Körpers angeordneten Funktionsbauteilen, die eine elektrisch betriebene Funktionseinheit und eine einen Energiespeicher aufweisende elektrische Versorgungseinrichtung für die Funktionseinheit umfassen, sowie ein Verfahren zu deren therstellung.

Derartige Zahnbürsten sind grundsätzlich bekannt.

Die WO 99/63859 A1 beschreibt eine Zahnbürste, bei der gemäß einer Ausführungsform in einen als Lichtleiter ausgebildeten Zahnbürstengriff eine LED sowie eine Schalteinheit zum Ein- und Ausschalten der LED integriert sind, wobei die Schalteinheit eine Batterie, eine flexible Kontaktelektrode sowie eine flexible Membran umfasst. Im Bereich der Membran der Schalteinheit wird das Material des Zahnbürstengriffes zur Bildung eines vorstehenden Bereiches mit einer dünnen Materialschicht überformt.

In der WO 00/07482 A1 geht es um den Nachweis von Ablagerungen auf den Zähnen. Es wird eine Zahnbürste beschrieben, in welche lichtleitende Elemente integriert sind. Dabei sind die lichtleitenden Elemente in den Zahnbürstenkopf integriert, der getrennt von dem Zahnbürstengriff in einem Spritzgiessverfahren hergestellt und anschließend mit dem Zahnbürstengriff gekoppelt wird.

Die WO 99/59462 A1 beschäftigt sich ebenfalls mit dem Nachweis von Ablagerungen auf den Zähnen. In diesem Zusammenhang wird in der Druckschrift auch eine Zahnbürste mit integrierten lichtleitenden Elementen beschrieben, wobei jedoch die Zahnbürste in dieser Druckschrift lediglich untergeordnete Rolle spielt.

In der WO 01/47392 A1 ist eine Zahnbürste beschrieben, die mit Mitteln versehen ist, welche es gestatten, die Technik des Zähnebürstens bei der Benutzung der Zahnbürste zu ermitteln sowie zu überwachen.

Bei der Herstellung derartiger Zahnbürsten kommt es insbesondere darauf an, dass die innerhalb des Körpers angeordneten Funktionsbauteile korrekt positioniert sind und eine sichere sowie zuverlässige Funktionsweise gewährleistet ist. Da derartige Zahnbürsten meist in großen Stückzahlen hergestellt werden, soll ferner die Herstellung im Rahmen einer kostengünstigen und effizienten Massenproduktion möglich sein. Nachdem des Weiteren das äußere Erscheinungsbild der Zahnbürste für die Kaufentscheidung zunehmend eine nicht unwesentliche Rolle spielt, soll die Konstruktion der Zähnbürste eine möglichst große Designfreiheit erlauben, welcher bei der Herstellung der Zahnbürste Rechnung getragen werden muss. Dabei kommt es nicht nur darauf an, eine ergonomisch vorteilhafte Zahnbürste zu schaffen, die "gut in der Hand liegt", sondern die Zahnbürste muss außerdem einfach bedienbar sein, während der Benutzung sicher festgehalten werden können und eine einwandfreie, sich angenehm anfühlende Oberfläche aufweisen, d.h. der Benutzer soll die Zahnbürste einfach "gerne in die Hand nehmen" wollen.

Die in WO 01/58306 A1 beschriebene Zahnbürstenherstellung ist vergleichsweise aufwändig, da zwei separate Halbschalen verwendet werden, bei denen Probleme hinsichtlich des Verzugs der Schalen und damit der Passgenauigkeit sowie der Wasserdichtheit auftreten können. Ferner sind für die Schalen einerseits und die zusätzlich erforderliche Umspritzung andererseits eine Mehrzahl von Spritzgiesswerkzeugen oder mehrere unterschiedliche Kavitäten erforderlich. Des Weiteren ist auch die Montage der Funktionsbauteile mit einem relativ großen Aufwand verbunden.

Bei dem in WO 02/054906 A1 beschriebenen Herstellungsverfahren bestehen lediglich eingeschränkte Designmöglichkeiten, da mit einem Formkern gearbeitet wird, der im Anschluss an den Spritzvorgang gezogen wird, wodurch sich die Formgebung auf im Wesentlichen zylindrische Geometrien beschränkt. Insbesondere können nur Zahnbürsten mit einem geraden Halsbereich hergestellt werden, um das Einschieben der Komponenten von hinten zu ermöglichen.

Die WO 01/28452 A1 beschreibt die Herstellung einer Zahnbürste in einem Zwei- oder Mehrkomponenten-Spritzgiessverfahren. Eine Vibrationsvorrichtung, Verbindungsleitungen sowie weitere elektronische Komponenten werden dabei als eine Einheit in einen aus einer ersten Materialkomponente gespritzten Formteil eingelegt und danach mit der zweiten Materialkomponente - oder mit den weiteren Materialkomponenten - umspritzt. Dabei muss es sich nicht um ein vollständiges Umspritzen handeln. Einige Teile können frei liegen, wodurch eine ästhetische Wirkung erzielt werden kann. Nähere Angaben zu dem Spritzgiessverfahren oder zu den Materialkomponenten werden in dieser Druckschrift nicht gemacht.

Der Erfindung liegt die Aufgabe zugrunde, eine Möglichkeit zur Herstellung von Zahnbürsten zu schaffen, die den eingangs erwähnten Anforderungen gerecht wird und bei der insbesondere mit einer minimalen Anzahl von erforderlichen Spritzgiesswerkzeugen und Montageschritten gleichzeitig eine maximale Designfreiheit gegeben ist, wobei insbesondere die Herstellung eines gebogenen Halsbereichs möglich sein soll.

Die Lösung dieser Aufgabe erfolgt durch die Merkmale des unabhängigen Verfahrensanspruchs 18 und insbesondere dadurch, dass der Körper aus zumindest einer als Festigkeitsträger dienenden Hartkomponente sowie wenigstens einer Weichkomponente im Spritzgiessverfahren hergestellt wird, und dass wenigstens einige der Funktionsbauteile während der Herstellung des Körpers zumindest teilweise direkt mit dem die Weichkomponente bildenden Kunststoff umspritzt werden.

Die Erfindung betrifft außerdem eine Zahnbürste nach Anspruch, bei der wenigstens einige Funktionsbauteile zumindest teilweise direkt mit dem die Weichkomponente des Zahnbürstenkörpers bildenden Kunststoff umspritzt sind.

Bevorzugte Ausführungsformen der Erfindung sind in den abhängigen Ansprüchen, der Beschreibung sowie der Zeichnung angegeben.

Die Herstellung des Zahnbürstenkörpers aus wenigstens einer Hartkomponente und zumindest einer Weichkomponente ermöglicht eine hohe Designfreiheit bei gleichzeitiger Erfüllung der Stabilitäts- und Festigkeitsanforderungen an die Zahnbürste.

Durch das erfindungsgemäß vorgesehene direkte Umspritzen der Funktionsbauteile mit dem Kunststoff erfolgt eine optimale Integration der Funktionsbauteile in den Zahnbürstenkörper. Somit können bereits bei der Herstellung des Körpers die Funktionsbauteile an den dem jeweiligen Design entsprechenden Stellen im Körper positioniert werden, wodurch dem Designer ein maximaler Spielraum für die Formgestaltung der Zahnbürste verliehen wird. Ferner wird durch die erfindungsgemäße Vorgehensweise die Zahnbürstenherstellung erheblich verkürzt und vereinfacht, da Spritz- und Montageschritte gleichzeitig oder unmittelbar nacheinander erfolgen können. Des Weiteren ist von Vorteil, dass die Funktionsteile durch das direkte Umspritzen mit dem Kunststoff automatisch am Zahnbürstenkörper fixiert werden, was die Durchführung ggf. erforderlicher weiterer Herstellungsschritte vereinfacht.

Von besonderem Vorteil ist außerdem, dass die Funktionsbauteile durch das Umspritzen optimal vor äußeren Einflüssen geschützt und insbesondere wasserdicht eingekapselt werden können.

Die Erfindung bedeutet eine Abkehr von der bekannten Vorgehensweise bei der Zahnbürstenherstellung, bei der eine strenge Trennung zwischen Spritzgiessschritten einerseits und Montageschritten andererseits eingehalten wird. Erfindungsgemäß wurde festgestellt, dass grundsätzlich die Funktionsbauteile den beim Kunststoffspritzen auftretenden Druck- und Temperaturbelastungen ausgesetzt werden können, ohne dass die Funktionsfähigkeit der Bauteile beeinträchtigt wird. Das Einbetten wenigstens einiger der Funktionsbauteile in die Weichkomponente hat des weiteren den Vorteil, dass der Spritzvorgang schonender für die Funktionsbauteile ist, da der Spritzdruck der Weichkomponente geringer als der der Hartkomponente ist. Die Weichkomponente hat ausserdem eine hohe Fliessfähigkeit, so dass die Funktionsbauteile zuverlässig umschlossen werden, auch wenn sie kompliziert geformt sein sollten. Ein weiterer Vorteil ist, dass die Funktionsbauteile in einem Arbeitsgang mit weiteren, sowieso bei den meisten Zahnbürsten vorhandenen weichelastischen Elementen, z.B. weichelastische Reinigungselemente am Borstenfeld oder eine elastische Zone im Halsbereich, gespritzt werden können. Damit ist kein zusätzlicher Herstellungsschritt notwendig.

Die erfindungsgemässe Zahnbürste hat den weiteren Vorteil, dass die Weichkomponente die Funktionsbauteile einbettet, schützt, gegebenenfalls abdichtet, jedoch aufgrund der elastischen Eigenschaften ihre Betätigung von Aussen und Kommunikation bzw. Interaktion (z.B. Betätigung, Informationsübertragung, Energieübertragung) mit der Aussenwelt ermöglicht. In einer vorteilhaften Weiterbildung der Erfindung, die weiter unten erläutert wird, fungieren die Funktionsbauteile in Verbindung mit der Weichkomponente auch als mechanischer Sensor, z.B. zur Überwachung des Putzdrucks.

In einer besonders bevorzugten Variante des erfindungsgemäßen Herstellungsverfahrens wird zunächst eine erste, bevorzugt harte, Komponente ohne Funktionsbauteile gespritzt. Diese hat vorzugsweise eine Aufnahme für die Funktionsbauteile, beispielsweise eine im Querschnitt U-förmige Ausnehmung an der Zahnbürstenrückseite, die vor dem Überspritzen auf einfache Weise befüllt werden kann.

Nach dem Spritzen der ersten Komponente werden zumindest einige Funktionsbauteile an der ersten Komponente positioniert und fixiert, wobei anschließend die Einheit aus erster Komponente und Funktionsbauteilen mit zumindest einer weiteren, bevorzugt weichen Komponente zumindest teilweise umspritzt wird. Bei dieser Variante ist von Vorteil, dass für die zu umspritzenden Funktionsbauteile keine speziellen Maßnahmen zum Festhalten am Spritzwerkzeug getroffen werden müssen. Insbesondere dann, wenn die erste Spritzkomponente eine Hartkomponente und die weitere Spritzkomponente eine Weichkomponente ist, bietet diese Variante den weiteren Vorteil einer besonderen Schonung der mit der Weichkomponente zu umspritzenden Funktionsbauteile, da Weichkomponenten zumindest in den meisten Fällen mit im Vergleich zur Hartkomponente geringem Druck und niedriger Temperatur gespritzt werden können.

Gemäß einer alternativen Variante werden vor dem Spritzen einer ersten Komponente zumindest einige Funktionsbauteile in einem Spritzgiesswerkzeug positioniert und daraufhin mit der ersten Komponente umspritzt, wobei anschließend die Einheit aus erster Komponente und umspritzten Funktionsbauteilen mit zumindest einer weiteren Komponente umspritzt werden. Da bei dieser Variante die Funktionsbauteile zunächst am Spritzgiesswerkzeug positioniert werden und daher das Formwerkzeug zum Halten der Funktionsbauteile an diesen angreifen muss, ist nach dem Spritzen der ersten Komponente diese mit Freistellungen für die Angriffspunkte an den vorpositionierten Funktionsbauteilen versehen. Beim Spritzen der weiteren Komponente werden diese Freistellungen geschlossen, so dass sie am fertigen Produkt nicht mehr zu erkennen sind.

Um die Belastungen der Funktionsbauteile durch das Spritzen weiter zu minimieren, kann gemäß einem weiteren Ausführungsbeispiel der Erfindung vorgesehen sein, dass zumindest bei einer Komponente zunächst in einem ersten Schritt bei niedrigem Spritzdruck eine Überdeckung der Funktionsbauteile gebildet und anschließend in wenigstens einem weiteren Schritt die Komponente bei hohem Spritzdruck vervollständigt wird.

Des Weiteren ist in einer Variante der Erfindung vorgesehen, dass vor dem Spritzen einer weiteren Komponente an der Einheit aus zumindest einer ersten Komponente und zu umspritzenden Funktionsbauteilen wenigstens ein weiteres zu umspritzendes Funktionsbauteil fixiert wird. Bei diesem weiteren Funktionsbauteil handelt es sich insbesondere um ein z.B. stift-, klammer- oder bügelförmiges Kontaktelement zur Herstellung einer elektrischen Verbindung zwischen zwei oder mehreren anderen Funktionsbauteilen.

Die Funktionsbauteile können in vorteilhafter Weise für einen Zusatzzweck genutzt werden, wenn gemäß einer weiteren bevorzugten Ausführungsform der Erfindung wenigstens ein für ein oder mehrere später einzusetzende Funktionsbauteile vorgesehener Hohlraum einer ersten Komponente durch wenigstens ein mit der ersten Komponente umspritztes und/oder mit wenigstens einer weiteren Komponente zu umspritzendes Funktionsbauteil gegenüber einer weiteren Komponente abgedichtet wird.

Gemäß einem weiteren bevorzugten Ausführungsbeispiel der Erfindung ist vorgesehen, dass durch Spritzen einer Weichkomponente ein zum Betätigen wenigstens eines elektrischen Funktionsbauteils in einen Hohlraum einer zuvor gespritzten Hartkomponente eindrückbarer Betätigungsbereich ausgebildet wird. Hierdurch werden in vorteilhafter Weise die elastischen Eigenschaften der Weichkomponente genutzt, um einen Betätigungsbereich z.B. zum Beaufschlagen eines im Zahnbürstenkörper angeordneten Schaltelementes zum Ein- und Ausschalten der Zahnbürste zu schaffen.

Des Weiteren wird erfindungsgemäß vorgeschlagen, einen insbesondere im Halsbereich oder im Bereich des Übergangs zwischen Halsbereich und Griffbereich gelegenen Vibrationsdämpfungsbereich des Körpers aus wenigstens zwei unterschiedlichen Spritzgiesskomponenten herzustellen. Hierdurch können die Dämpfungseigenschaften des Dämpfungsbereiches gezielt an die jeweiligen Erfordernisse angepasst werden. Besonders bevorzugt ist es, wenn der Vibrationsdämpfungsbereich durch eine gezielte Schwächung einer Hartkomponente mittels einer Weichkomponente gebildet wird.

Zur Bildung des Vibrationsdämpfungsbereiches ist es bevorzugt, wenn zunächst beim Spritzen einer Hartkomponente diese mit einem Muster von Ausnehmungen hergestellt wird und anschließend beim Spritzen wenigstens einer weiteren Komponente, bei der es sich insbesondere um eine Weichkomponente handelt, mit dieser die Ausnehmungen gefüllt werden.

Eine elektrische Verbindung zwischen einer im Kopfbereich oder im Halsbereich angeordneten Vibrationseinrichtung einerseits und einem im Griffbereich angeordneten Energiespeicher andererseits ist vorzugsweise über ein bistabiles Schaltelement herstellbar bzw. unterbrechbar, das durch Beaufschlagen an zwei auf gegenüberliegenden Seiten eines Gelenkbereiches gelegenen Schenkeln zwischen zwei zumindest im Wesentlichen formstabilen Zuständen umgesteuert werden kann.

Ein derartiges bistabiles Schaltelement, das auch als "Frosch" bezeichnet wird, kann insbesondere durch einen von einer gespritzten Weichkomponente gebildeten Schaltbereich, der vom Benutzer in einen Hohlraum, in welchem der Frosch angeordnet ist, hineingedrückt werden kann, betätigt werden.

Bei den Funktionsbauteilen, die direkt mit zumindest einer Kunststoffkomponente umspritzt werden, handelt es sich insbesondere um
- eine Vibrationseinrichtung, die bevorzugt eine Anordnung aus Elektromotor und Exzenter oder einen elektromagnetisch angetriebenen Schwinganker umfasst,
- mit der Vibrationseinrichtung verbundene elektrische Leitungen,
- separate Kontaktelemente, die dazu dienen, elektrische Verbindungen zwischen den anderen Funktionsbauteilen herzustellen.

Grundsätzlich können die zu umspritzenden Funktionsbauteile - in Abhängigkeit von der jeweiligen Konstruktion der Zahnbürste - außerdem Sensoren (z.B. Sensoren zur Druck- und Zeitmessung, zum Plaque-Nachweis, zur Positionsbestimmung, zur Bewegungsermittlung sowie zur Detektion von chemischen Substanzen oder Zusammensetzungen), Licht emittierende Bauteile, Widerstände, ICs, Schalteinrichtungen sowie akustische Bauelemente umfassen. Des weiteren können Steckkontakte (Buchse), z.B. zum Aufladen der Energiequelle oder zur Strom- oder Datenübertragung, Datenträger, z.B. Mikrochips, oder ein beispielsweise zum Diebstahlschutz einsetzbarer Passivsender (Radio Frequency Identification Chip) vorhanden sein. Bei gewissen Anwendungen, z.B. bei Verwendung eines Passivsenders, ist es entbehrlich, eine Energiequelle in die Zahnbürste zu integrieren.

Durch das Überspritzen mit der zweiten Komponente werden die Funktionsbauteile am vorgesehenen Standort fixiert, bei Einsatz der weichelastischen Komponente falls nötig flexibel gelagert und im überspritzten Bereich gegen das Eindringen von Wasser abgedichtet. Eine Möglichkeit, mit der Aussenwelt Kontakt herzustellen, ist das Überspritzen von Funktionsbauteilen mit einer dünnen Schicht der Weichkomponente, die zur Herstellung einer leitenden Verbindung durchstochen werden kann. Die gummielastische Weichkomponente hat die Eigenschaft, sich nach dem Entfernen des spitzen Kontaktgebers wieder wasserdicht zu verschliessen. Ein ähnliches Prinzip kann eingesetzt werden, um innerhalb der Zahnbürste eine leitfähige Verbindung zwischen Komponenten herzustellen, die relativ zueinander z.B. durch Biegen der Bürste beweglich sind.

Es kann sich bei den Funktionsbauteilen also um elektronische Bauelemente handeln, die eine vergleichsweise große Empfindlichkeit gegenüber äußeren Einflüssen aufweisen können. Die Funktionsbauteile können mit einer Schutzummantelung beispielsweise aus Kunststoff, Keramik oder Metall versehen sein. Außerdem können die Funktionsbauteile mit einem Harz oder einem anderen Schutzmaterial umgossen sein.

Um die Belastungen der zu umspritzenden Funktionsbauteile auf ein Minimum zu reduzieren, ist es erfindungsgemäß bevorzugt, wenn mit einem relativ niedrigen Spritzdruck gearbeitet wird, wobei jedoch gleichzeitig eine homogene Materialverteilung im jeweiligen Spritzgiessteil sichergestellt wird. Bevorzugt werden besonders leicht fließende Kunststoffe verwendet. Das erfindungsgemäß bevorzugte Material ist Polypropylen (PP) mit einem Fliessindex von MVR 4 - 25, wobei insbesondere PP mit einem Fließindex von MVR 20 zum Einsatz kommt.

Ferner sind erfindungsgemäß vorzugsweise relativ niedrige Verarbeitungstemperaturen vorgesehen. Insbesondere dann, wenn gemäß der vorstehend erwähnten besonders bevorzugten Variante zunächst eine erste Komponente ohne Funktionsbauteile gespritzt wird, wird als bevorzugtes Material TPE verwendet, und zwar bei einer Temperatur im Bereich von 170°C bis 250°C, vorzugsweise von etwa 200°C.

Erfindungsgemäß kann beim Spritzen der Komponenten jeweils sowohl entweder ein einziger Anspritzpunkt oder eine Mehrzahl von Anspritzpunkten verwendet werden. Im Fall eines einzigen Anspritzpunktes wird dessen Position vorzugsweise derart gewählt, dass das empfindlichste Funktionsbauteil in einer möglichst großen Entfernung vom Anspritzpunkt gelegen ist, so dass ein möglichst langer Kunststofffüllweg bis zu diesem Funktionsbauteil zurückgelegt werden muss. Bei Verwendung sowohl eines einzigen Anspritzpunktes als auch mehrerer Anspritzpunkte kann außerdem jeweils mit einem zeitlich variierenden Spritzdruck gearbeitet werden. Der Druckverlauf kann dabei gezielt an die jeweiligen Gegebenheiten angepasst werden. Insbesondere an dem dem empfindlichsten Funktionsbauteil nächstgelegenen Anspritzpunkt kann mit einem relativ geringen Nachdruck von weniger als 600 bar und vorzugsweise von weniger als 200 bar gearbeitet werden.

Was die verwendeten Kunststoffmaterialien anbetrifft, so kann für eine Hartkomponente des Zahnbürstenkörpers z.B. Acrylbutadienstyrol (ABS), Polystyrol (PS), Polyethylenterephtalat (PET), Styrol-Acrylnitril (SAN), Polycarbonat (PC), Polyamid (PA) oder PolymethylMethacrylat (PMMA) verwendet werden, wobei das bevorzugte Material PP ist. Für die Weichkomponente wird vorzugsweise ein zur jeweiligen Hartkomponente affines, d.h. ein sich mit der Hartkomponente verbindendes, thermoplastisches Elastomer (TPE) verwendet, wodurch besonders geeignete weichelastische bzw. gummielastische Eigenschaften erzielt werden können.

Für zumindest eine Komponente des Zahnbürstenkörpers kann ein lichtdurchlässiger bzw. transparenter oder zumindest transluzenter Kunststoff vorgesehen sein. Hierfür kommt insbesondere MABS, SAN, PA, PC, PMMA, PS oder PET in Frage. Bei der Verarbeitung von transparenten Kunststoffen wird bevorzugt mit einem vergleichsweise hohen Spritzdruck gearbeitet, wofür die vorstehend erwähnte Variante, bei der zunächst eine erste Komponente ohne Funktionsbauteile gespritzt wird, besonders geeignet ist.

Des Weiteren ist erfindungsgemäß vorzugsweise vorgesehen, dass entweder an keiner Stelle oder zumindest in solchen Regionen des Zahnbürstenkörpers, die relativ großen Kräften wie insbesondere Biege- und Torsionskräften ausgesetzt sind, eine vorgegebene Mindestwandstärke des Kunststoffs nicht unterschritten wird. Bei der Hartkomponente wird bevorzugt ein Wert von etwa 0,5 mm für diese minimale Wandstärke nicht unterschritten, wobei vorzugsweise die Mindestwandstärke im Bereich von 1 bis 5 mm liegt. Eine Region, an welcher bis auf die Mindestwandstärke herunter gegangen wird, ist vorzugsweise der Bereich des Halses, an welchem die Vibrationseinrichtung angeordnet ist.

Die minimale Schichtdicke der zu überspritzenden Weichkomponente beträgt 0,5 mm. Vorzugsweise liegt diese aber zwischen 1 - 6 mm, damit die Funktionskomponenten bei hellen Farben der Weichkomponente nicht optisch durchscheinen können und damit beim Zähneputzen eine Art Dämpfer gegen die teilweise harten (z.B. metallischen) Funktionselemente besteht.

Gemäß einer weiteren bevorzugten Ausführungsform der Erfindung ist vorgesehen, dass zumindest einige Funktionsbauteile derart an einer bereits gespritzten Kunststoffkomponente, insbesondere einer Hartkomponente, angeordnet werden, dass sich die Funktionsbauteile bezogen auf die Strömungsrichtung einer noch zu spritzenden weiteren Kunststoffkomponente, insbesondere einer Weichkomponente, zumindest bereichsweise im Schatten wenigstens eines schützenden Abschnitts der Hartkomponente befinden.

Hierdurch können die zu umspritzenden Funktionsbauteile auf besonders einfache und dennoch wirkungsvolle Weise vor den Einflüssen insbesondere hinsichtlich Druck und Temperatur der anschließend zu spritzenden Komponente oder Komponenten geschützt werden. Bei den stromaufwärts der Funktionsbauteile gelegenen Abschnitten handelt es sich insbesondere um gezielt vorgesehene oder ohnehin konstruktionsbedingt vorhandene Hindernisse oder Vorsprünge der zuvor gespritzten Komponente.

Des Weiteren ist der zu spritzende Kunststoffkörper der erfindungsgemäßen Zahnbürste vorzugsweise derart ausgelegt, dass im Bereich der Funktionsbauteile scharfe Vorsprünge, Ecken und Kanten vermieden werden, um eine insbesondere durch Kerbwirkung bedingte Bruchgefahr auszuschließen oder zumindest auf ein Minimum zu reduzieren.

Zur Versorgung von Funktionsbauteilen mit elektrischer Energie werden vorzugsweise elektrische Leitungen in Form eines metallischen Drahtes verwendet, die zumindest dann, wenn Leitungen unterschiedlicher Polaritäten zusammen geführt werden, bevorzugt mit einer elektrisch isolierenden Ummantelung versehen sind. Auf eine derartige Ummantelung kann insbesondere dann verzichtet werden, wenn die betreffenden Leitungen separat und in einem ausreichend großen Abstand voneinander geführt werden. Alternativ können die elektrischen Verbindungen in Form von gespritzten, elektrisch leitfähigen Kunststoffen, von gestanzten Metallblechen, von auf der gespritzten Kunststoffkomponente metallisch geprägten Leiterbahnen oder von durch galvanische Verfahren auf der gespritzten Kunststoffkomponente aufgebrachten Leiterbahnen vorgesehen sein.

Des Weiteren werden vorzugsweise zumindest diejenigen elektrischen Verbindungen, welche entlang solcher Regionen der Zahnbürste geführt werden, die wie insbesondere der Halsbereich elastischen Verformungen ausgesetzt sind, derart ausgeführt, dass sie einerseits möglichst flexibel sowie bruchresistent gegenüber Wechselbiegungen sind und andererseits nicht zu einer zusätzlichen Versteifung der betreffenden Zahnbürstenregion führen.

Vorzugsweise wird erfindungsgemäß der Kunststoffkörper der Zahnbürste derart ausgebildet, dass elektrische Verbindungen zwischen einer Stromquelle und einem Stromverbraucher entlang einer möglichst geraden Linie verlaufen. Elektrische Leitungen können hierdurch bei der Montage auf besonders einfache Weise gezogen werden. Hierzu wird bevorzugt in einer der Spritzkomponenten des Zahnbürstenkörpers ein zumindest im Wesentlichen geradlinig verlaufender Kanal für elektrische Verbindungsleitungen ausgebildet.

Die Erfindung wird im Folgenden beispielhaft unter Bezugnahme auf die Zeichnung beschrieben. Es zeigen:
- Fig. 1 - 7: einzelne Schritte eines Verfahrens zur Herstellung einer Zahnbürste gemäß einer Ausführungsform der Erfindung,
- Fig. 8: einen Schritt eines alternativen Herstellungsverfahrens gemäß der Erfindung,
- Fig. 9: in einer vergrößerten Darstellung die Anordnung und Funktionsweise eines Schaltelementes einer erfindungsgemäßen Zahnbürste,
- Fig. 10: in einer vergrößerten Darstellung eine Möglichkeit zur Herstellung einer elektrischen Verbindung an einer erfindungsgemäßen Zahnbürste,
- Fig. 11: verschiedene Ansichten einer fertig hergestellten erfindungsgemäßen Zahnbürste,
- Fig. 12a-d: mögliche Ausführungsformen einer vorgefertigten Baugruppe von Funktionsbauteilen für eine erfindungsgemäße Zahnbürste,
- Fig. 13: Darstellungen einer erfindungsgemäßen Zahnbürste zur Erläuterung der Verriegelung eines Deckels,
- Fig. 14: verschiedene Ansichten einer weiteren Ausführungsform einer erfindungsgemäßen Zahnbürste,
- Fig. 15: verschiedene Ansichten einer weiteren Ausführungsform einer erfindungsgemäßen Zahnbürste,
- Fig. 16: ein Beispiel für ein bei einem erfindungsgemäßen Herstellungsverfahren verwendbares Bestückungspalett,
- Fig. 17: schematisch ein Beispiel für eine Montageanlage zur erfindungsgemäßen Herstellung einer erfindungsgemäßen Zahnbürste,
- Fig. 18a-d: Beispiele für eine Zahnbürste mit einer optischen Funktionsgruppe,
- Fig. 19: die Realisierung des Schaltelements als Drucksensor,
- Fig. 20: den hinteren Griffbereich einer Zahnbürste.

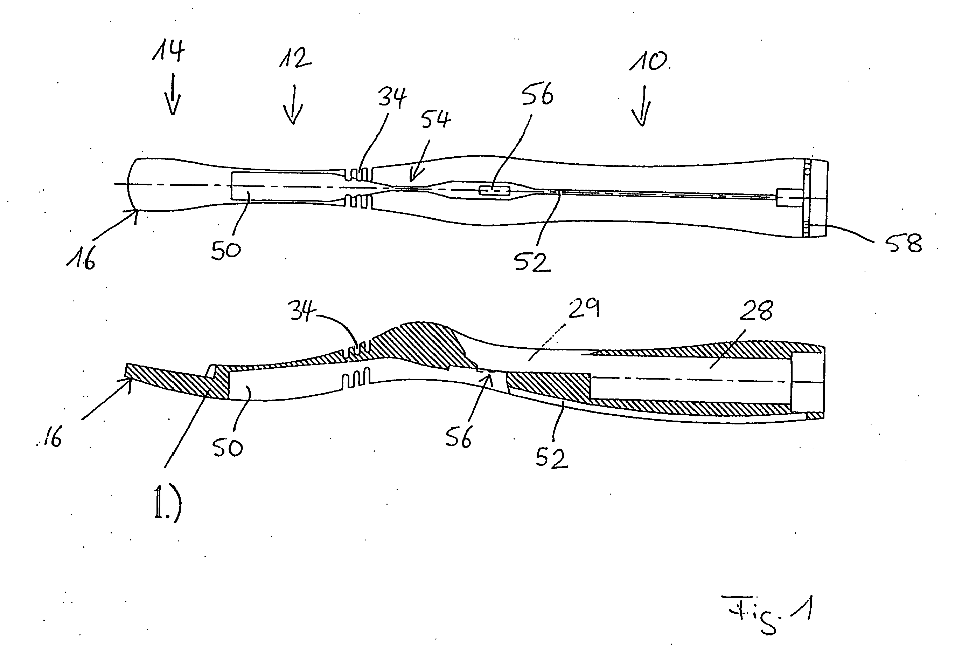

Die im Folgenden zunächst anhand der Fig. 1 - 8 beschriebene Variante betrifft ein besonders bevorzugtes erfindungsgemäßes Herstellungsverfahren, bei dem zunächst eine Kunststoff-Hartkomponente 16 des Zahnbürstenkörpers ohne Funktionsbauteile gespritzt wird.

Fig. 1 zeigt die fertig gespritzte Hartkomponente 16, bei der bereits ein Griffbereich 10, ein Halsbereich 12 sowie ein Kopfbereich 14 ausgebildet sind. Der den Kopfbereich 14 und den Griffbereich 10 auf Abstand haltende Halsbereich 12 weist bevorzugt eine Länge im Bereich von 30 mm bis 70 mm und insbesondere von etwa 50 mm auf. Der den Griffbereich 10 und den Kopfbereich 14 miteinander verbindende Halsbereich 12 ist gegenüber dem Griffbereich 10 und dem Kopfbereich 14 verjüngt, wie aus der die Rückansicht zeigenden oberen Abbildung der Fig. 1 zu erkennen ist.

Die Hartkomponente 16 umfasst ferner eine im Halsbereich 12 im Querschnitt U-förmig ausgebildete Ausnehmung 50 für eine Vibrationseinrichtung. Im Übergangsbereich zwischen Halsbereich 12 und Griffbereich 10 sind Ausnehmungen 34 ausgebildet, die Bestandteil eines Vibrationsdämpfungsbereiches 32 sind. Des weiteren ist ein sich von dem vorderen Hohlraum 50 bis in den Bereich des hinteren Endes erstreckender Kanal 52 für elektrische Verbindungsleitungen, ein hinterer Hohlraum 28 für einen Energiespeicher in Form einer Batterie oder eines wiederaufladbaren Akkumulators vom Typ AAA sowie ein Hohlraum 29 zur Betätigung eines nicht dargestellten Schaltelementes vorhanden. Der letztgenannte Hohlraum 29 steht über einen Durchbruch 56 mit dem in diesem Bereich erweiterten Kanal 52 in Verbindung.

Wie insbesondere aus der unteren, eine geschnittene Seitenansicht darstellenden Abbildung hervorgeht, verläuft der Kanal 52 an der Unterseite der Zahnbürste.

Die Hartkomponente 16 weist des Weiteren im Bereich des hinteren Endes eine Ausnehmung 58 für einen U-förmigen Kontaktbügel auf.

Auf die vorstehend erwähnten Merkmale der Hartkomponente 16 sowie auf die Funktionsbauteile der erfindungsgemäßen Zahnbürste wird an anderer Stelle näher eingegangen.

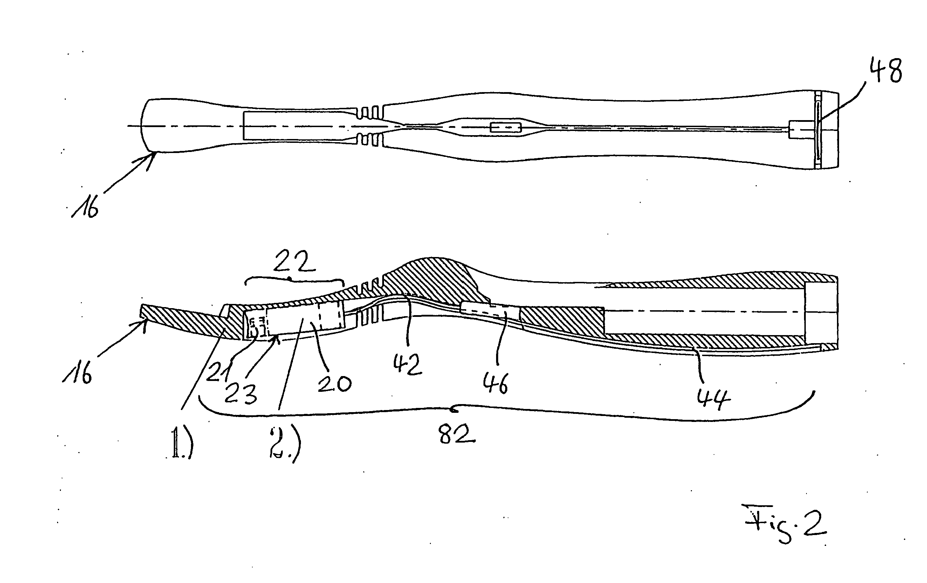

Gemäß Fig. 2 wird in einem nächsten Schritt eine zuvor aus einzelnen Bauteilen zusammengestellte Funktionsbaugruppe 82 an der Hartkomponente 16 fixiert. Diese Baugruppe 82 umfasst eine Vibrationseinrichtung 22, einen Elektromotor 20 und einen von diesem antreibbaren Exzenter 21 mit einer Länge von 1,5-5 mm und einem maximalen Durchmesser von 4-10 mm, die in einem Schutzelement, hier einer Schutzhülse 23, angeordnet sind. Mit dieser Vibrationseinrichtung 22 kann der Kopfbereich 14 der Zahnbürste zu Schwingungen mit einer Frequenz von mehreren 1000 Hz, vorzugsweise 10000-20000 Hz, angeregt werden. Die Hülse 23 dient einerseits zum Schutz der Vibrationseinrichtung 22 vor Druck- und Temperatureinwirkungen der anschließend zu spritzenden Kunststoffkomponente und andererseits zur Freistellung des Exzenters gegenüber dem Kunststoffmaterial dieser Komponente. Die spritzdruckresistente Hülse 23 ist aus Kunststoff, Keramik oder - vorzugsweise - Metall hergestellt, insbesondere aus einer vernickelten Messinglegierung. Alternativ kann die Schutzhülse 23 von einem Kunststoff gebildet sein, dessen Schmelzpunkt oberhalb der Temperatur der anschließend zu spritzenden Kunststoffkomponente liegt. Es werden vorzugsweise verstärkte Kunststoffe eingesetzt, z.B. mit Glasfasern verstärkte Kunststoffe. Die Außenlänge der Hülse 23 beträgt etwa 10 bis 25 mm, vorzugsweise 21 mm, während der Durchmesser der Hülse 23 etwa 2 bis 10 mm, vorzugsweise 7 mm, beträgt und die Wandstärke der Hülse 23, die bis zu 3 mm betragen kann, vorzugsweise 0,5 mm beträgt. Ein optional zusätzlich angebrachter Deckel verlängert die Länge des Schutzelements (Hülse und Deckel) um 1-4 mm, vorzugsweise 3,5 mm. Falls ein Deckel vorhanden ist, ist kein Ausgiessen mit Harz notwendig. Die Hülse 23 wird nach dem Einführen des Exzenters 21 und des Motors 20 entweder mittels eines mit Durchgängen für die Stromversorgung des Motors versehenen Deckels verschlossen oder mit einer flüssig aufgetragenen und anschliessend aushärtenden Substanz (z.B. einem Harz, Lack oder Zweikomponentenleim) ausgegossen. In Höhe des Endes des Motors 20 ist vorzugsweise an der Hülse 23 ein Anschlag vorgesehen, wodurch ein zu weites Vorschieben des Exzenters 21 während der Montage verhindert wird. Das freie Drehen des Exzenters ist somit gewährleistet.

Anstatt einer Hülse können auch zwei schalenförmige Kunststoffteile, welche die Funktion von Hülse und Deckel übernehmen, eingesetzt werden. Die Montage kann mit dieser Ausgestaltungsform vereinfacht werden. Die Vibrationsvorrichtung wird mittels Haftreibung oder einem leichten Presssitz in der Ausnehmung der Hartkomponente fixiert. Diese Fixierung ist so zu gestalten, dass dieses Funktionselement durch die anschliessend eingespritzte Weichkomponente nicht vom vorgesehenen Platz weggeschwemmt werden kann.

Mit der Vibrationseinrichtung 22 verbunden sind zwei elektrische Verbindungsleitungen 42, 44. Diese sind vorzugsweise in Form eines ummantelten Litzen- oder Einzeldrahtes aus Kupfer vorgesehen, wobei der Drahtdurchmesser, der bis zu 1 mm betragen kann, bevorzugt 0,3 mm beträgt. Die Dicke der Ummantelung liegt im Bereich von 0,1 bis 0,5 mm und beträgt vorzugsweise 0,2 mm.

Hierdurch ist die Ummantelung sicher gegen das so genannte Abschwemmen während des Umspritzens mit dem Kunststoff geschützt, so dass selbst dann, wenn die elektrischen Leitungen 42, 44 aufgrund des Spritzdruckes verschoben werden, kein Kurzschluss auftreten kann.

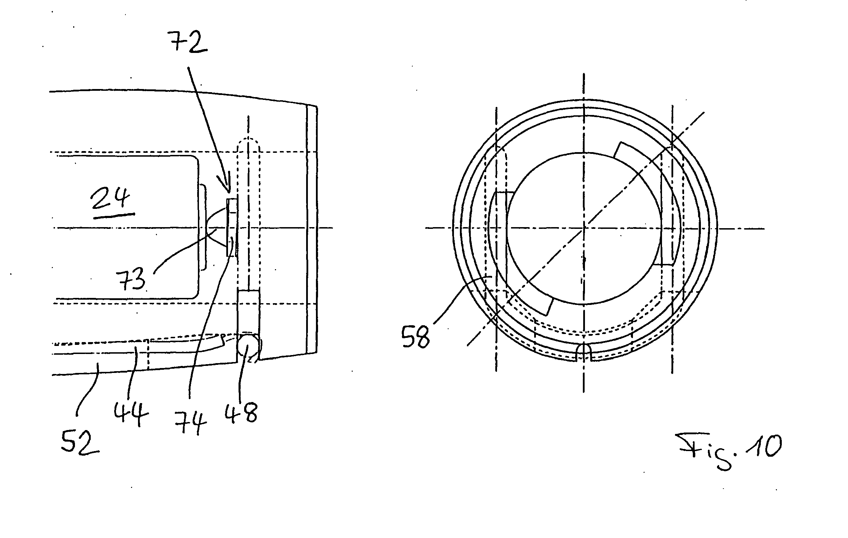

Eine elektrische Leitung 42 ist relativ kurz ausgeführt und reicht bis zu dem Durchbruch 56 zwischen dem erweiterten Bereich des Kanals 52 und dem mittleren Hohlraum 29 (vgl. Fig. 1). Hierzu ist die kurze Leitung 42 in diesem Ausführungsbeispiel mit einem als axiale Verlängerung der Leitung 42 ausgebildeten, stift- (Fig. 9) oder plättchenförmigen (Fig. 2) Kontaktelement 46 versehen. Das Kontaktelement 46 ist aus Metall vorzugsweise aus einer vernickelten Messinglegierung hergestellt. Über ein an anderer Stelle näher beschriebenes Schaltelement kann das Kontaktelement 46 mit dem einen Pol eines im hinteren Hohlraum 28 angeordneten Energiespeichers verbunden werden. Das Kontaktelement 46 ist vorzugsweise mit dem kurzen Kabel 42 fest verbunden (z.B. verlötet) und somit ein Teil der Motorenbaugruppe.

Zur Kontaktierung mit dem anderen Pol des Energiespeichers dient die längere Verbindungsleitung 44, die bis zu der im hinteren Bereich ausgebildeten Ausnehmung 58 (vgl. Fig. 1) reicht.

Bevorzugt sind die elektrischen Leitungen 42, 44 als Bestandteile der vorgefertigten Baugruppe 82 jeweils bereits auf die benötigte Länge vorkonfektioniert. Die freien Enden der Leitungen 42, 44 können ferner bereits abisoliert und verzinnt sein, was insbesondere dann von Vorteil ist, wenn zur Kontaktierung mit weiteren elektrischen Funktionsbauteilen keine Lötverbindungen, sondern kraftschlüssige Verbindungen vorgesehen sind. Hierauf wird nachstehend näher eingegangen.

Bevorzugt ist die Funktionseinheit bereits vor dem Einsetzen in den Zahnbürstenkörper und vor dem Umspritzen mit der Weichkomponente montiert. Beispielsweise sind das Kontaktelement 46 und der U-förmige Kontaktbügel 48 bereits mit den Kabelenden fest verbunden, insbesondere verlötet. Hierdurch werden Fertigungsunsicherheiten ausgeschlossen.

Um die Leitungen 42, 44 an der Hartkomponente 16 zu fixieren, ist der Kanal 52 zwischen dem Vibrationsdämpfungsbereich 34 und dem erweiterten Kanalbereich mit Fixierungselementen für die elektrischen Verbindungen ausgebildet. Durch diesen beispielsweise als Labyrinth 54 (vgl. Fig. 1), insbesondere als 3-Punkt-Labyrinth, ausgebildeten Haltebereich sind die Leitungen 42, 44 gegen ein Herausfallen gesichert sowie gegen Zug gesichert. Alternativ können Kanalverengungen, Hinterschneidungen oder separate Elemente aus Metall oder Kunststoff zur Fixierung verwendet werden. Alternativ können die elektrischen Komponenten thermisch und/oder mechanisch mit der Hartkomponente verschmolzen werden.

Der Kontaktstift 46 und der Durchbruch 56 (vgl. Fig. 1) sind derart aufeinander abgestimmt, dass der im mittleren Bereich gelegene Hohlraum 29 gegen das Eindringen von Kunststoff der anschließend zu spritzenden Komponente von unten abgedichtet ist.

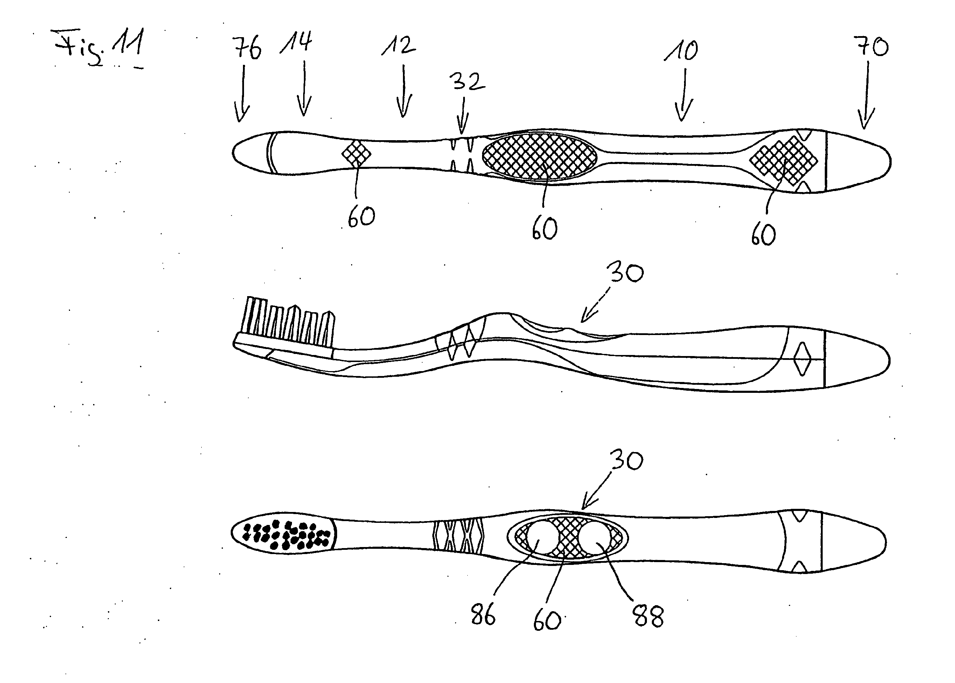

Vor dem Spritzen der nächsten, vorzugsweise weichen Komponente wird in die am hinteren Ende ausgebildete Ausnehmung 58 der bereits erwähnte, U-förmige Kontaktbügel eingeführt, insbesondere kraftschlüssig eingepresst, wodurch die lange Verbindungsleitung 44 auch an ihrem freien Ende fixiert wird und außerdem ein elektrischer Kontakt zwischen dem freien Ende der Leitung 44 und dem Kontaktbügel hergestellt wird, ohne dass eine Lötverbindung hergestellt werden muss. Der Kontaktbügel ist aus Metall, vorzugsweise aus einer vernickelten. Messinglegierung, hergestellt. Auf den Kontaktbügel wird an anderer Stelle in Verbindung mit Fig. 10 näher eingegangen.

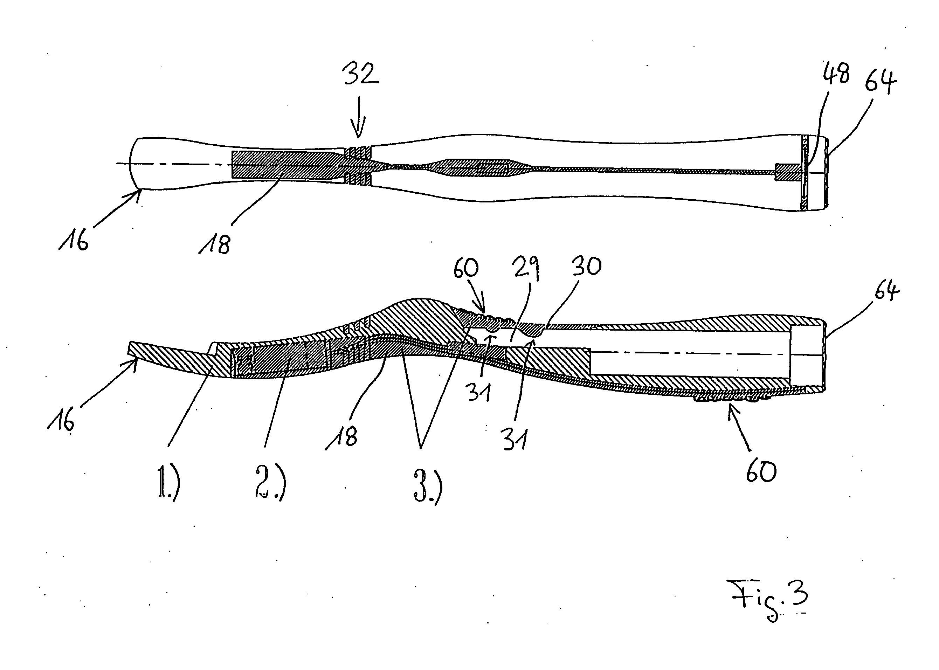

Fig. 3 zeigt die erfindungsgemäße Zahnbürste nach dem Spritzen der Weichkomponente 18. Das Spritzen der Weichkomponente 18 erfolgt in einer zweiten Kavität (Formnest) des Spritzgiesswerkzeugs, in welche die Hartkomponente 16 nach dem Bestücken mit den vorstehend beschriebenen Funktionsbauteilen (Vibrationseinrichtung 22 aus Hülse 23, Exzenter 21, gegebenenfalls Hülsendeckel und Motor 20, elektrische Leitungen 42, 44, Kontaktstift 46 sowie Kontaktbügel 48) eingelegt wird.

Die Weichkomponente 18 überdeckt die an der Hartkomponente 16 angeordneten Funktionsbauteile, d.h. diese Funktionsbauteile werden direkt mit dem die Weichkomponente 18 bildenden Kunststoff umspritzt.

Durch das Spritzen der Weichkomponente 18 wird der im mittleren Bereich vorgesehene Hohlraum 29 nach oben geschlossen. Der weichelastische Kunststoff der Weichkomponente 18 bildet hier einen durch Betätigung von außen in den Hohlraum 29 eindrückbaren Schaltbereich 30, der an seiner Innenseite mit zwei in den Hohlraum 29 hinein vorstehenden Schaltvorsprüngen 31 versehen ist. Die Bildung dieses auch als Schaltmembran bezeichneten Schaltbereiches 30 erfolgt mit Hilfe eines nicht dargestellten Formkerns des Spritzgiesswerkzeugs, der während des Spritzens der Weichkomponente 18 in den Hohlraum 29 eingeführt ist. Die weichelastischen Eigenschaften des Schaltbereiches 30 ermöglichen eine problemlose Zwangsentformung durch Herausziehen des Formkerns nach hinten, wodurch der nachgiebige Schaltbereich 30 über die Schaltvorsprünge 31 nach außen gedrückt wird und anschließend aufgrund seiner Elastizität wieder die in Fig. 3 gezeigte Normalstellung einnimmt.

Die Shore-Härte A des Schaltbereiches 30 liegt vorzugsweise unter 70, vorzugsweise unter 40, und beträgt insbesondere etwa 35. In diesem Bereich hat die Weichkomponente die optimalen Eigenschaften für die Funktion der Dämpfungselemente, weichelastischer Reinigungselemente und Dichtelemente sowie für den Schaltbereich zur Betätigung des Schalters.

Des Weiteren wird durch das Spritzen der Weichkomponente 18 der Vibrationsdämpfungsbereich 32 vervollständigt, indem die entsprechenden Ausnehmungen 34 (vgl. Fig. 1) der Hartkomponente 16 mit dem Kunststoff der Weichkomponente 18 gefüllt werden.

Wie in Fig. 3 angedeutet, können durch das Spritzen der Weichkomponente 18 außerdem weitere Funktionsbereiche 60 gebildet werden, die vorzugsweise als zusätzliche Dämpfungsbereiche im Bereich der Finger- und/oder Handauflage ausgebildet sind und beispielsweise in Form von Lamellen, kleinen Polstern oder grundsätzlich beliebig ausgestalteten, sich wiederholenden Mustern vorgesehen sein können.

Ferner wird durch das Spritzen der Weichkomponente 18 an der nach hinten weisenden Stirnseite des Zahnbürstenkörpers eine umlaufende Dichtlippe 64 ausgebildet, die eine wasserdichte Anbringung eines Abschlussdeckels ermöglicht, worauf an anderer Stelle noch näher eingegangen wird.

Das Eindringen der Weichkomponente 18 in den mittleren Hohlraum 29 von unten wird durch den mit dem Ende der kurzen elektrischen Leitung 42b (vgl. Fig. 2) verbundenen Kontaktstift 46 verhindert, der den Durchbruch 56 (vgl. Fig. 1) verschließt. Zur Abstützung des Kontaktstiftes 46 während des Spritzens der Weichkomponente dient der vorstehend erwähnte, in den Hohlraum eingeführte Formkern des Spritzgiesswerkzeugs.

Die Funktionen des weichelastischen Materiales (Überspritzen von Funktionsbauteilen, Vibrationsdämpfung, Schaltbereich, Oberflächentextur, Dichtung, Gummielastische Reinigungselemente etc.) werden vorzugsweise mit genau einem Material ab wenigstens einem Einspritzpunkt realisiert. Alternativ und aus Kostengründen weniger bevorzugt können verschiedene Funktionen mittels verschiedener Materialien, z.B. mit verschiedenen Shore A Härten oder Farben, über verschiedene Anspritzpunkte realisiert werden.

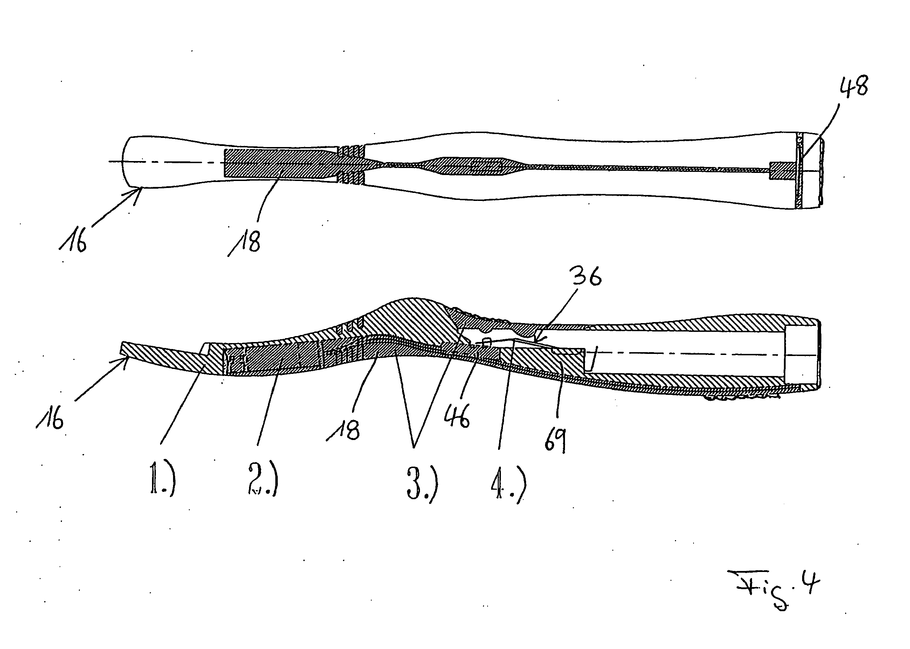

Anschließend wird gemäß Fig. 4 von hinten das Schaltelement 36 (Frosch) in den Hohlraum 29 eingeführt. Der Frosch 36 wird an einem Tragabschnitt 69 der Hartkomponente 16 einfach durch Aufstecken fixiert. Hierauf wird nachstehend in Verbindung mit Fig. 9 näher eingegangen.

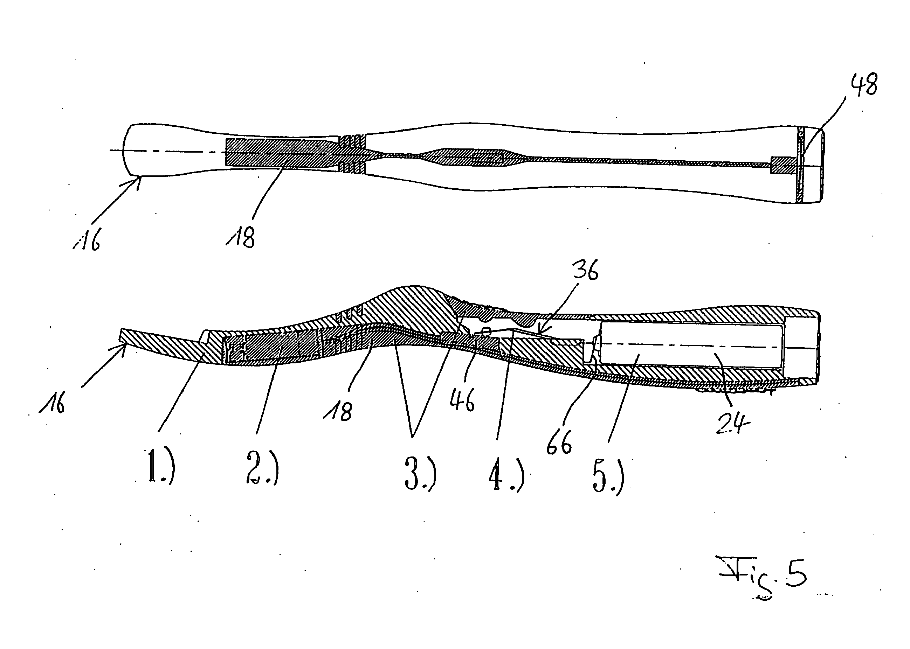

In einem nächsten Schritt wird gemäß Fig. 5 eine Batterie 24, insbesondere eine Batterie vom AAA-Typ (1,5 V), von hinten in den hierfür vorgesehenen Hohlraum 28 eingeführt.

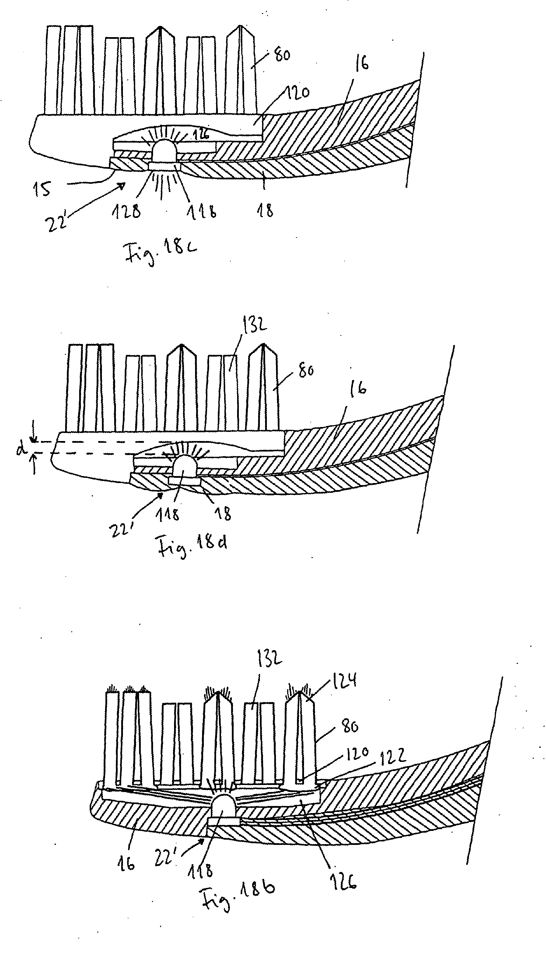

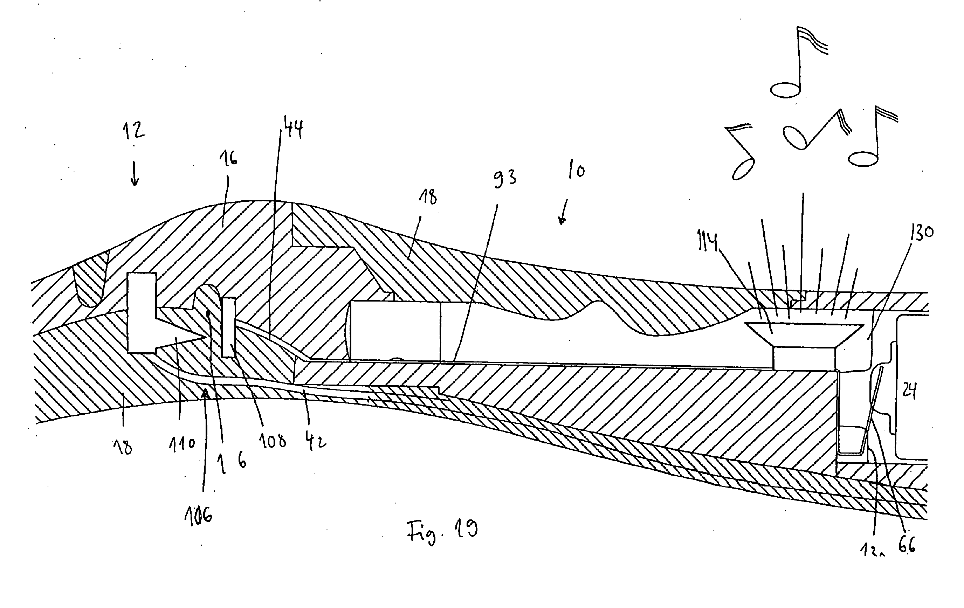

Als Längenausgleich und zur Kontaktierung des einen Batteriepoles dient ein am hinteren Ende des Frosches 36 ausgebildeter Federabschnitt 66. Auf der Höhe des Federabschnittes sind an der Innenseite der Hartkomponente mindestens ein, vorzugsweise drei bis vier Elemente 130 (vgl. Fig. 19) angeformt, welche einen Anschlag für die Batterie 24 darstellen. Mit dieser Ausgestaltung kann der Federweg der Batterie 24 genau eingestellt werden. Bei einem Sturz der Bürste aus grösserer Höhe verhindern die Elemente 130 das Überbiegen des Federelementes 66 durch die Batterie.

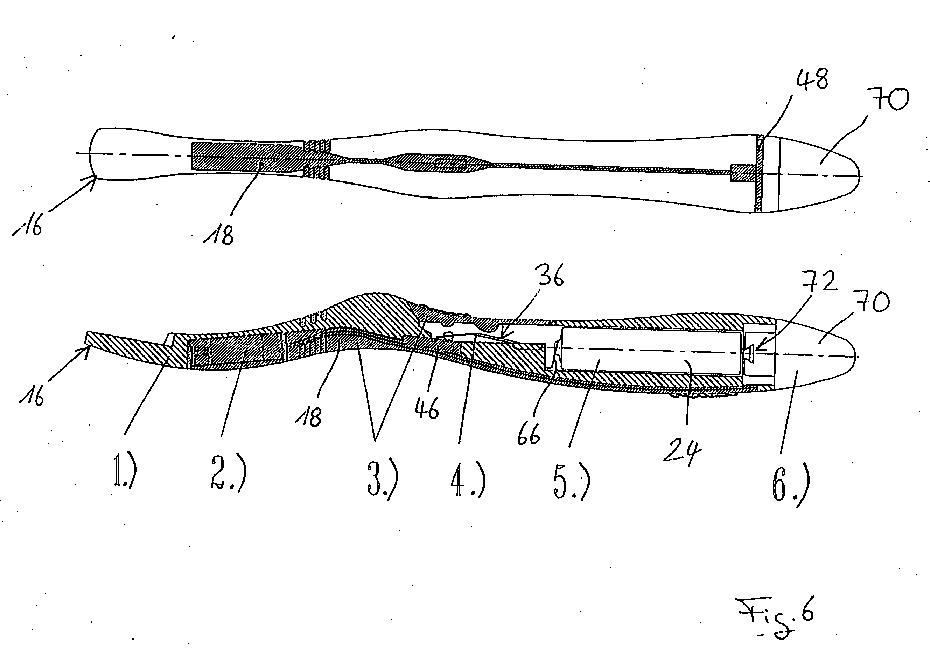

Gemäß Fig. 6 wird in einem nächsten Schritt auf das hintere Ende des Zahnbürstenkörpers ein Deckel 70 aufgesetzt. Bei dem Deckel 70 handelt es sich um eine vormontierte Baugruppe, die einen elektrisch leitfähigen Kontaktabschnitt 72 umfasst, über den im montierten Zustand eine elektrische Verbindung zwischen dem anderen Pol der Batterie 24 einerseits und dem zuvor in die Ausnehmung 58 der Hartkomponente 16 (vgl. Fig. 1) eingesetzten und anschließend mit der Weichkomponente 18 umspritzten (vgl. Fig. 3) Kontaktbügel 48 hergestellt wird, womit die elektrische Verbindung aller beteiligten Funktionsbauteile komplettiert ist.

Die Verbindung zwischen dem Deckel 70 und dem hinteren Ende des Zahnbürstenkörpers unter Zwischenlage der durch Spritzen der Weichkomponente 18 ausgebildeten Dichtlippe 64 (vgl. Fig. 3) erfolgt bevorzugt nach Art eines Bajonettverschlusses, worauf in Verbindung mit Fig. 10 und insbesondere Fig. 13 näher eingegangen wird. Alternativ kann die Verbindung z.B. durch andere geeignete Mittel wie beispielsweise durch Verrasten erfolgen.

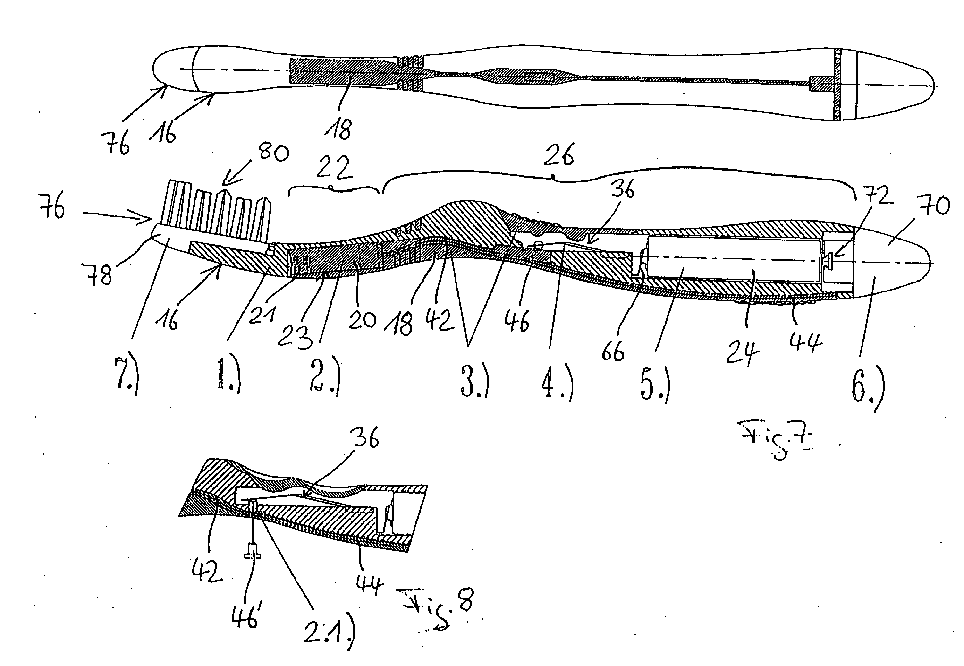

Wie Fig. 7 zeigt, erfolgt anschließend die Montage eines vorgefertigten Bürstenkopfes 76. Die Befestigung des Kopfes 76 am Kopfbereich 14 der Hartkomponente 16 kann grundsätzlich durch beliebige geeignete Mittel wie beispielsweise Verrasten, Verkleben oder Verschweißen, insbesondere Ultraschallschweißen, erfolgen.

Die vorstehend erwähnte Anbringung eines komplett vorgefertigten Kopfes 76 aus einer bereits mit den Borsten 80 versehenen Plattform 78 hat den Vorteil, dass verschiedene Köpfe 76 am Kopfbereich 14 der Hartkomponente 16 angebracht werden können. So kann der anzubringende Kopf 76 alternativ mit Massageelementen anstelle von Reinigungselementen versehen sein. Auch eine Kombination von Massage- und Reinigungselementen an einem Kopf ist erfindungsgemäß möglich. In der WO 98/01055 A1 bzw. EP 0 910 258 B ist ein Konzept für auswechselbare Köpfe an Zahnbürsten beschrieben.

Grundsätzlich ist es ebenfalls möglich, die Borsten mittels eines geeigneten Beborstungsprozesses direkt an der Hartkomponente der Bürste anzubringen. Vorzugsweise wird die Bürste vor dem Befüllen mit den elektrischen Funktionsbauteilen und dem Überspritzen der Weichkomponente beborstet. während des Überspritzens der Funktionsbauteile können anschliessend mittels der Weichkomponente zusätzliche weichelastische Reinigungs- und/oder Massageelemente direkt am Bürstenkopf angebracht werden. Das Beborsten, d.h. das Bestücken des Kopfes mit Reinigungs- und/oder Massageelementen, kann grundsätzlich durch einen beliebigen Beborstungsprozess (z.B. IMT oder AFT) erfolgen.

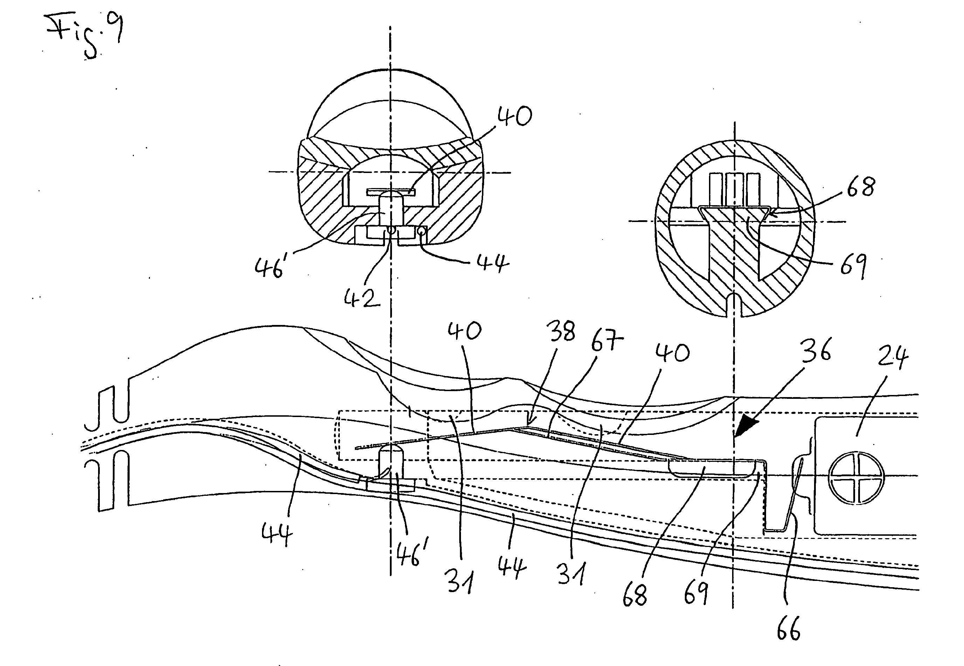

Fig. 8 zeigt eine vorstehend bereits angesprochene Variante zur Herstellung einer elektrisch leitfähigen Verbindung zwischen der kurzen elektrischen Leitung 42 und dem Schaltelement (Frosch) 36. Anstelle des bereits im vorkonfektionierten Zustand fest mit dem freien Ende der kurzen elektrischen Leitung 42 verbundenen Kontaktelementes 46 (vgl. Fig. 2) ist gemäß dieser Variante ein separater Kontaktstift 46' vorgesehen, der nach dem Anbringen der vorkonfektionierten Baugruppe 82 an der Hartkomponente 16 und vor dem Spritzen der Weichkomponente 18 in eine bei dieser Variante beim Spritzen der Hartkomponente 16 ausgebildete Ausnehmung eingeführt wird, wodurch eine elektrisch leitfähige Verbindung zwischen dem Kontaktstift 46' und dem freien Ende der kurzen elektrischen Leitung 42 hergestellt wird. Über den Kontaktstift 46' kann dann das Schaltelement 36 mit der kurzen elektrischen Leitung 42 elektrisch verbunden werden.

Das Einsetzen des Kontaktstiftes 46' stellt in dieser Variante folglich einen weiteren Herstellungsschritt 2.1.) dar, der zusammen mit dem bereits vorstehend beschriebenen Einführen des U-förmigen Kontaktbügels 48 erfolgt.

Die während des Spritzens der Weichkomponente 18 erforderliche Fixierung des Kontaktstiftes 46' kann durch einen speziellen Schieber des Spritzgiesswerkzeugs erfolgen, durch den der Kontaktstift 46' sicher in Position gehalten wird. Bei dieser Halteeinrichtung kann es sich um einen gesteuerten Schieber handeln, der während des Spritzvorgangs in eine Arbeitsposition gebracht wird und den Kontaktstift 46' gegen die Kraft der einströmenden Kunststoffmasse abdichtend gegen die Begrenzung des Durchbruchs 56 zum oberen Hohlraum 29 bzw. gegen eine Wand drückt, die den oberen Hohlraum 29 von dem darunter liegenden Aufnahmebereich der Hartkomponente 16 trennt und eine Öffnung für den Kontaktstift 46' aufweist. Mittels des vorstehend erwähnten, im Hohlraum 29 angeordneten Formkerns kann während des Spritzens der Weichkomponente 18 eine Abstützung des Kontaktstiftes 46' erfolgen.

Vorzugsweise erfolgt die Fixierung des Kontaktstiftes 46' jedoch nicht durch einen Schieber, sondern einfach durch kraftschlüssiges Einpressen. Hierzu kann der Kontaktstift 46' mit Haltemitteln z.B. in Form von Randrierungen, Oberflächenaufrauungen oder Hinterfangungen versehen sein, wodurch das Herstellen einer wirksamen kraftschlüssigen Verbindung vereinfacht wird. Entsprechend erfolgt vorzugsweise auch das Einführen und Fixieren des Kontaktbügels 48 in die Ausnehmung 58 durch kraftschlüssiges Einpressen.

Die Verwendung des separaten Kontaktstiftes 46' ist gegenüber dem Einsatz eines fest mit der kurzen elektrischen Leitung 42 verbundenen Kontaktstiftes 46 die bevorzugte Vorgehensweise.

Fig. 9 zeigt in der unteren Abbildung vergrößert den Bereich des Zahnbürstenkörpers, in welchem das Schaltelement (Frosch) 36 angeordnet ist. Der Frosch besteht aus Metall, vorzugsweise aus Federstahl. Der Frosch 36 weist zwei Schenkel 40 auf, die an einem Gelenkbereich 38 gelenkig miteinander verbunden sind. Der in Fig. 9 linke Schenkel 40 dient zur Kontaktierung des vorstehend erläuterten separaten Kontaktstiftes 46' (vgl. Fig. 8) oder des integrierten Kontaktelements 46 (vgl. insbesondere Fig. 2 und Fig. 4), wobei hierzu der betreffende Schenkel 40 des Frosches 36 modifiziert sein kann, wie es z.B. aus Fig. 4 hervorgeht. Der Kontaktstift ist bevorzugt integrierter Bestandteil der Motorenbaugruppe.

Der andere Schenkel 40 des Frosches 36 ist an seinem Ende mit einem Steckabschnitt 68 versehen, mit welchem der Frosch 36 über einen im Querschnitt schwalbenschwanzartig ausgebildeten Tragabschnitt 69 der Hartkomponente 16 geschoben wird (vgl. das rechte vergrößerte Detail in Fig. 9), wodurch der Frosch 36 am Zahnbürstenkörper fixiert wird. Zahnartige Vorsprünge am Steckabschnitt des Frosches verkeilen sich mit dem aus der Hartkomponente gebildeten Tragabschnitt. An den Steckabschnitt 68 des Frosches 36 schließt sich der bereits erwähnte Federabschnitt 66 zur Kontaktierung des einen Poles der Batterie 24 an.

Durch Beaufschlagen der Schenkel 40 über die an der Schaltmembran 30 ausgebildeten Schaltvorsprünge 31 kann der Frosch 36 zwischen zwei formstabilen Zuständen umgesteuert werden, um auf diese Weise die Zahnbürste ein- bzw. auszuschalten. Beispielsweise ausgehend von dem in Fig. 9 dargestellten Ein-Zustand wird durch Beaufschlagen des in Fig. 9 rechten Schenkels 40 der Gelenkbereich 38 nach unten bewegt, wodurch der Frosch 36 ab einer bestimmten Eindrücktiefe umschnappt und der in Fig. 9 linke Schenkel 40 nach oben springt und damit außer Kontakt mit dem Kontaktstift 46' bzw. 46 gelangt. Entsprechendes gilt bei Beaufschlagung des in Fig. 9 linken Schenkels 40 zum Einschalten der Zahnbürste. Das Umschnappen des Frosches 36 wird unterstützt durch parallel zum in Fig. 9 rechten Schenkel 40 verlaufende Arme 67, die mit dem anderen, in Fig. 9 linken Schenkel 40 verbunden sind. Aus dem gleichen Grund wird zusätzlich in der Verlängerung des Tragabschnittes unter dem Frosch aus der Hartkomponente eine Rampe gebildet (in Fig. 9 nicht dargestellt).

Das in Fig. 9 links dargestellte vergrößerte Detail zeigt insbesondere die mittels des Kontaktstiftes 46' hergestellte elektrische Verbindung zwischen dem freien Ende der kurzen elektrischen Leitung 42 und dem Schenkel 40 des Frosches 36. Außerdem ist die an dem Kopf des Kontaktstiftes 46' vorbei geführte lange elektrische Leitung 44 zu erkennen.

Fig. 10 zeigt eine Seitensicht und eine Draufsicht auf das hintere Ende des Zahnbürstenkörpers. In der rechts dargestellten Draufsicht ist insbesondere die Lage der für den U-förmigen Kontaktbügel 48 vorgesehenen Ausnehmung 58 zu erkennen, während die links dargestellte Seitenansicht zeigt, wie mittels des in die Ausnehmung 58 eingeführten Kontaktbügels 48 eine elektrische Verbindung zwischen dem freien Ende der langen elektrischen Leitung 44 und dem Kontaktabschnitt 72 des hier ansonsten nicht dargestellten Deckels 70 (vgl. Fig. 6) hergestellt wird.

Der Kontaktabschnitt 72 des Deckels 70 umfasst einen gegenüber dem Deckel vorzugsweise federnden Kontaktkopf 73 zur Kontaktierung der Batterie 24 und eine Kontaktzunge 74, die radial über einen zylindrischen Tragabschnitt 71 (vgl. Fig. 13), von dem der Kontaktabschnitt 72 gehalten ist, vorsteht. Die Kontaktzunge 74 dient zum einen zur Kontaktierung des Kontaktbügels 48 und zum anderen zur Verriegelung des Deckels am Zahnbürstenkörper nach Art eines Bajonettverschlusses, indem die Kontaktzunge 74 die Schenkel des U-förmigen Bügels 48 hintergreift. Der Kontaktabschnitt bestehend aus Kontaktkopf und Kontaktzunge ist vorzugsweise einstückig ausgebildet und besteht aus Metall, vorzugsweise aus Federstahl. Der Kontaktabschnitt ist derart im Deckel versenkt, dass der Kontaktkopf nur einen begrenzten Federweg ausführen kann. Nach einem bestimmten, zugelassenen Federweg steht die Batterie am Deckel an. Somit besteht auch hier, wie beim Frosch, eine Federwegbegrenzung, welche bei einem Sturz der Bürste aus grösserer Höhe verhindert, dass der Federkopf zu stark deformiert werden kann.

Sowohl mittels des separaten Kontaktstiftes 46' (vgl. Fig. 8 und Fig. 9) als auch des separaten Kontaktbügels 48 werden die erforderlichen elektrischen Verbindungen folglich ohne Löten hergestellt, was den Herstellungsprozess für die erfindungsgemäße Zahnbürste erheblich vereinfacht.

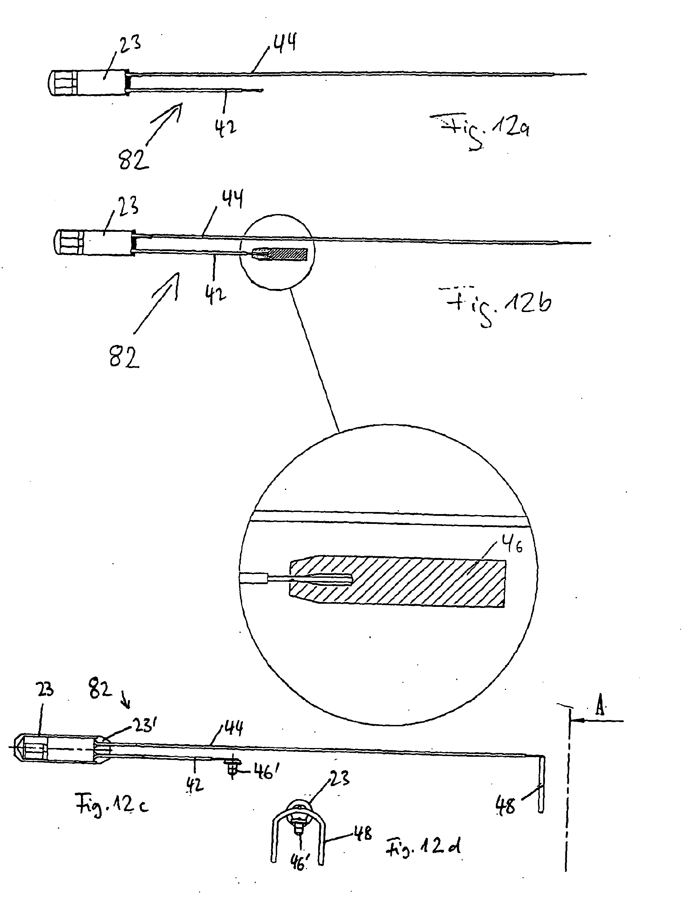

Fig. 11 zeigt ein bevorzugtes Design einer erfindungsgemäßen, nach dem Verfahren der Erfindung hergestellten Zahnbürste in verschiedenen Ansichten. In der oberen Rückansicht sind insbesondere durch Spritzen der Weichkomponente 18 hergestellte Funktionsbereiche 60, die außer als Designmerkmal zur Vibrationsdämpfung dienen und/oder für eine besonders gute Griffigkeit der erfindungsgemäßen Zahnbürste sorgen. Die zum Teil als Hand- bzw. Fingerauflage dienenden Funktionsbereiche 60 sind in dem dargestellten Beispiel an der Rückseite (i) im Bereich des Übergangs zwischen dem Kopfbereich 14 und dem Halsbereich 12, (ii) im Griffbereich 12 in Höhe eines Zwischenbereiches zwischen dem Vibrationsdämpfungsbereich 32 und dem Schaltbereich 30 sowie (iii) im Bereich des hinteren Endes des Griffbereiches 10 gelegen. Ein weiterer Funktionsbereich 60 umgibt auf der Vorderseite die beiden Schaltpunkte 86.

Außerdem zu erkennen in Fig. 11 ist der von der Hartkomponente und der Weichkomponente gemeinsam gebildete Vibrationsdämpfungsbereich 32 im Bereich des Übergangs zwischen Griffbereich 10 und Halsbereich 12, der in diesem bevorzugten Designbeispiel eine netzförmige Geometrie aufweist. Durch eine derartige Ausgestaltung lassen sich besonders gute Torsions-, Flexibilitäts- und Dämpfungseigenschaften erzielen.

Die untere Draufsicht zeigt insbesondere den von der gespritzten Weichkomponente gebildeten Schaltbereich 30 mit den beiden Schaltpunkten 86, 88 zum Einschalten (Schaltpunkt 86) und Ausschalten (Schaltpunkt 88) der Zahnbürste.

Wie aus den Darstellungen der Fig. 11 hervorgeht, weist die erfindungsgemäße Zahnbürste - obwohl es sich um eine elektrisch betriebene Zahnbürste handelt - eine ansprechende elegante Formgebung ohne störende Verdickungen oder unförmig wirkende Bereiche auf. Insbesondere ist die erfindungsgemäße Zahnbürste mit einem unter ästhetischen Gesichtspunkten besonders ansprechenden gebogenen und gegenüber dem Griffbereich verjüngten Halsbereich 12 versehen. Ein derartiges schlankes Design wird durch das erfindungsgemäße Herstellungsverfahren ermöglicht, ohne dass dies zu Zugeständnissen hinsichtlich Aufwand und Zeitbedarf bei der Herstellung der Zahnbürste führen würde.

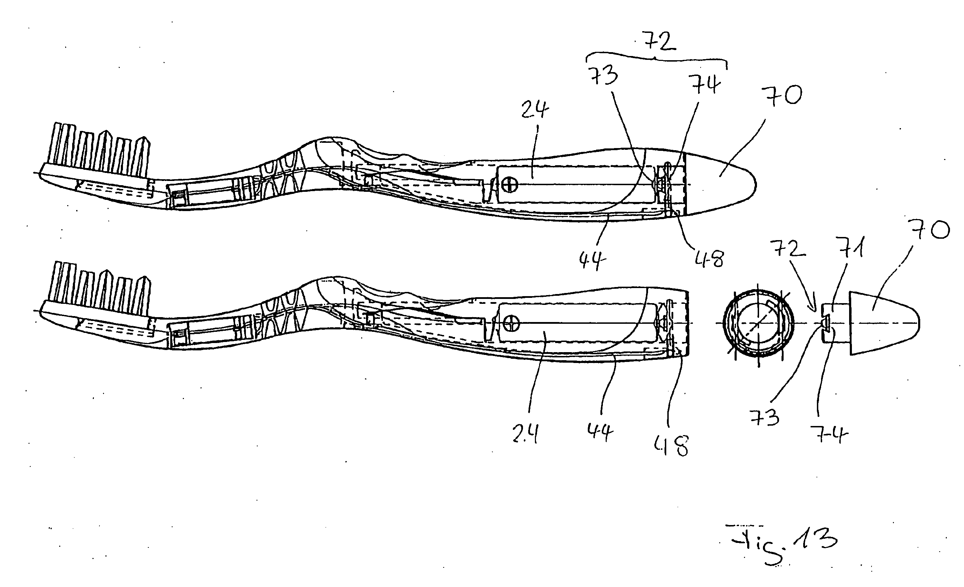

Die Fig. 12a und 12b zeigen jeweils die vorkonfektionierte Baugruppe 82, die in dem vorstehend beschriebenen Ausführungsbeispiel vor dem Spritzen der Weichkomponente 18 an der zuvor gespritzten Hartkomponente 16 angeordnet wird (vgl. Fig. 2). Dabei zeigt Fig. 12a die Variante ohne am freien Ende der kurzen elektrischen Leitung 42 angebrachten Kontaktstift, d.h. diese Variante wird in Verbindung mit dem vorstehend erläuterten separaten Kontaktstift 46' eingesetzt (vgl. insbesondere Fig. 8), während Fig. 12b die in den Fig. 2 - 7 dargestellte Variante mit an der elektrischen Leitung 42 angelötetem Kontaktstift 46 zeigt.

In Fig. 12c ist ein weiteres Beispiel für eine Motorenbaugruppe 82 gezeigt, die vor dem Umspritzen bereits vollständig zusammengesetzt ist. Exzenter und Motor sind in einer Schutzhülse 23 angeordnet, die mit einem Deckel 23' verschlossen ist. Leitungen 42, 44 sind durch Aussparungen im Deckel 23' nach aussen geführt. Mit der kurzen Leitung 42 ist der Kontaktstift 46' fest verbunden, insbesondere verlötet. Die lange Leitung 44 ist mit dem Kontaktbügel 48 fest verbunden, insbesondere verlötet. Fig. 12d zeigt eine Seitenansicht der Motorenbaugruppe in Richtung A.

Die Vibrationseinrichtung 22 umfasst in beiden Fällen die Schutzhülse 23, in welcher der Exzenter 21 sowie der Motor 20 angeordnet sind und welche nach dem Einbringen dieser Funktionsbauteile mit einem Harz ausgefüllt oder alternativ mit einem Deckel verschlossen wird.

Fig. 13 zeigt in der oberen Darstellung die erfindungsgemäße Zahnbürste in einem mittels des Deckels 7 geschlossenen Zustand, während die untere Darstellung die erfindungsgemäße Zahnbürste vor dem Verschließen mittels des Deckels 70 zeigt.

Wie bereits in Verbindung mit Fig. 10 erwähnt, erfolgt in dem dargestellten Ausführungsbeispiel die Verriegelung des Deckels 70 am Zahnbürstenkörper durch einen Bajonett-Verschluss. Zum Verschließen der Zahnbürste wird der Deckel 70 in einer Winkelstellung bezüglich des Zahnbürstenkörpers aufgesetzt, in welcher die bezüglich eines zylindrischen Tragabschnitts 71 des Deckels 70 an einander gegenüberliegenden Stellen radial vorstehende Kontaktzunge 74 des Kontaktabschnitts 72 des Deckels 70 derart geneigt zu den Schenkeln des U-förmigen Kontaktbügels 48 orientiert ist, dass die Kontaktzunge 74 an den Schenkeln vorbei in den Zahnbürstenkörper eingeführt und der Kontaktkopf 73 in Kontakt mit dem rückwärtigen Pol der Batterie 24 gelangen kann. Durch anschließendes Verdrehen des Deckels 70 bezüglich des Zahnbürstenkörpers, beispielsweise um 90° im Uhrzeigersinn (von hinten gesehen), hintergreift die Kontaktzunge 74 mit ihren beiden radial vorstehenden Endabschnitten die Schenkel des U-förmigen Kontaktbügel 48. Hierdurch wird zum einen der Deckel 70 sicher verriegelt und zum anderen der elektrische Kontakt zwischen der Kontaktzunge 74 und dem Kontaktbügel 48 und damit zwischen der langen elektrischen Leitung 44, dem Kontaktkopf 73 und der Batterie 24 hergestellt. Die Federelemente am Frosch und Kontaktabschnitt sowie die an der Dichtlippe sorgen für eine einstellbare Verschlusskraft zum Schliessen beziehungsweise Öffnen des Deckels.

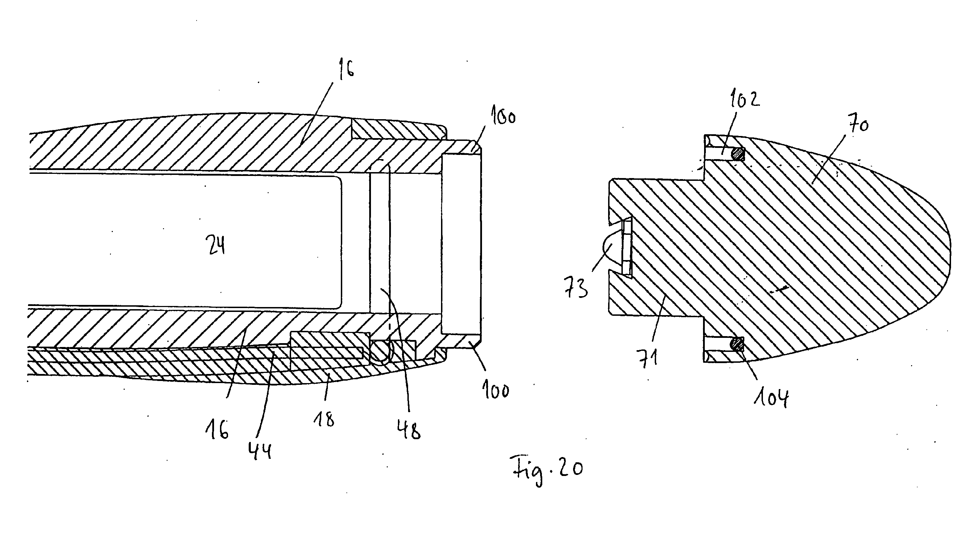

Wie in Fig. 20 dargestellt, kann zur besseren Fixierung des Deckels 70 sowie zum besseren Abdichten des Hohlraumes am Griffende der Bürste ein kreisförmiger Ring 100 aus der Hartkomponente angeformt werden, welcher in eine entsprechende Nut 102 des Deckels 70 eingreift. Zur verbesserten Abdichtung kann diese Nut 102 einen O-Ring 104 enthalten. Der Deckel 70 kann auf seiner Aussenseite zum vereinfachten Öffnen und Schliessen Vorsprünge, Rippen oder Ausnehmungen aufweisen (nicht dargestellt). Diese sollen das Abrutschen beim Drehen verhindern.

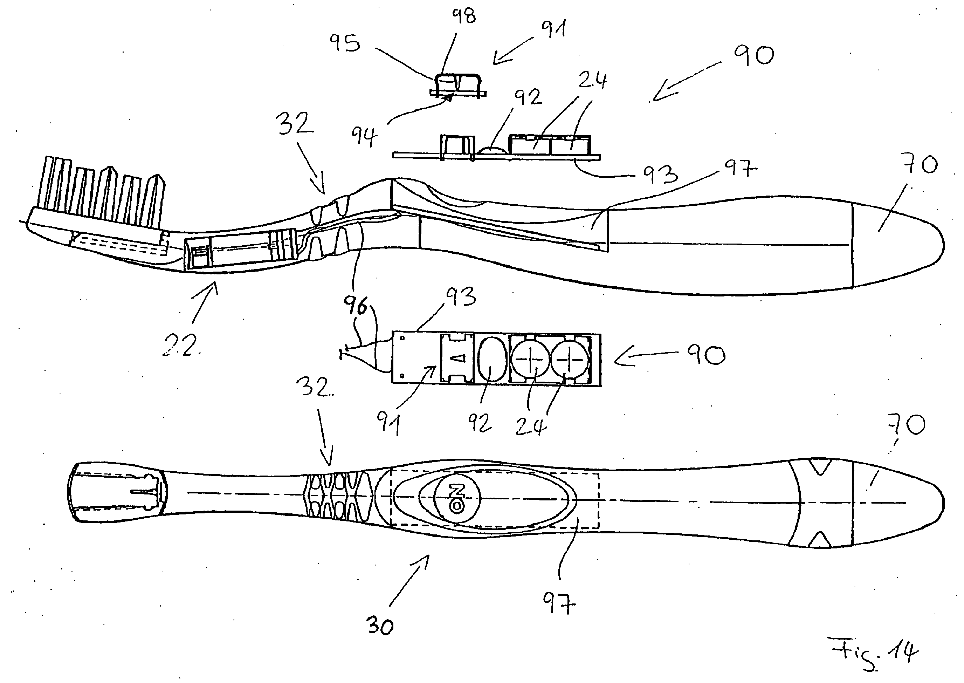

Fig. 14 zeigt eine weitere Ausführungsform einer erfindungsgemäßen Zahnbürste, bei der eine Steuereinheit 90 für die Vibrationseinrichtung 22 vorgesehen ist, die nach dem Spritzen der Hartkomponente in einem Aufnahmebereich 97 der Hartkomponente angeordnet und anschließend als Ganzes mit der Weichkomponente um- bzw. überspritzt wird.

Die Steuereinheit 90 umfasst einen insbesondere als Platine ausgebildeten Träger 93, auf dem zwei Batterien 24, beispielsweise handelsübliche Knopfbatterien (1,5V), eine integrierte Schaltung 92 sowie ein Schalter 91 angeordnet sind, der in Fig. 14 auch separat vergrößert dargestellt ist.

Der Schalter 91 ist in der dargestellten bevorzugten Variante ein Impulsschalter, mittels welchem immer dann ein Schaltvorgang ausgelöst wird, wenn das freie spitze Ende eines elektrisch leitfähigen, dornförmigen Schaltelementes 95 einen elektrisch leitfähigen Gegenkontakt 94 auf dem Träger bzw. der Platine 93 berührt.

Ausgelöst werden die Schaltvorgänge jeweils durch Niederdrücken einer elektrisch leitfähigen, verformbaren Halterung 98, an welcher das Schaltelement 95 befestigt und die am Träger 93 angebracht ist.

Der Schalter 91 ist derart ausgebildet, dass beim Spritzen der Weichkomponente auch der das Schaltelement 95 umgebende Raum innerhalb der Halterung 98 mit dem Kunststoffmaterial der Weichkomponente gefüllt wird. Hierdurch wird der dem Schaltweg des Schalters 91 entsprechende Zwischenraum zwischen dem freien Kontaktende des Schaltelementes 95 und dem Gegenkontakt 94 mit Kunststoff ausgefüllt. Bei der erstmaligen Betätigung des Schalters 91 wird dieses Material vom Kontaktdorn 95 durchstochen und ein erster Schaltvorgang ausgelöst. Eine automatische Rückstellung des Schaltelementes 95 erfolgt aufgrund der Elastizität der Weichkomponente, d.h. das Herunterdrücken des Schaltelementes 95 über die Halterung 98 zum Auslösen eines Schaltvorgangs erfolgt gegen die Rückstellkraft der Weichkomponente.

Die Vibrationseinrichtung 22, deren Aufbau der zuvor beschriebenen Vibrationseinrichtung entspricht, ist mit der Steuereinheit 90 über Versorgungsleitungen 96 verbunden. Die integrierte Schaltung 92 kann zur Realisierung der verschiedensten Steuerfunktionen ausgebildet sein. So kann beispielsweise vorgesehen sein, dass das Auslösen aufeinander folgender Schaltvorgänge mittels des Schalters 91 die Vibrationseinrichtung 22 abwechselnd ein- und ausschalten. Alternativ kann beispielsweise vorgesehen sein, dass die Vibrationseinrichtung 22 durch einmaliges Betätigen des Schalters 91 eingeschaltet wird und die Schaltung 92 dafür sorgt, dass die Vibrationseinrichtung 22 nach Ablauf einer vorgegebenen Zeitspanne automatisch abgeschaltet wird, ohne dass hierzu der Schalter 91 erneut betätigt zu werden braucht.

In einer alternativen Ausgestaltung können die Batterien 24 abgesetzt von der Steuereinheit 90 angeordnet und beispielsweise im hinteren Bereich des Griffbereiches positioniert sowie über zusätzliche Versorgungsleitungen mit der Steuereinheit 90 verbunden sein.

Die vorstehend anhand von Fig. 14 beschriebenen Zahnbürsten sind vorzugsweise als Wegwerfbürsten konzipiert, die nach dem Aufbrauchen der Batterien 24 entsorgt werden. Alternativ kann die Zahnbürste derart ausgestaltet sein, dass ein abnehmbarer Deckelabschnitt vorgesehen ist, über den die Batterien 24 zugänglich sind und ausgewechselt werden können, um auf diese Weise die Zahnbürste häufiger benutzen zu können.

In der in Fig. 14 dargestellten Ausführungsform ist der Schaltbereich 30 zur Betätigung des Schalters 91 im Bereich der Daumenablage der Zahnbürste vorgesehen. In einer Alternativvariante kann der Schaltbereich auch im Bereich des hinteren Endes der Zahnbürste angeordnet und dabei z.B. in den hinteren Endabschnitt des Zahnbürstenkörpers oder in den Deckel 70 integriert sein. Ferner ist es erfindungsgemäß möglich, dass der Deckel 70 als ein Drehschalter ausgebildet ist und gegenüber dem Zahnbürstenkörper um einen vorgegebenen Winkelbereich verdreht werden muss, um einen Schaltvorgang auszulösen.

In einer weiteren alternativen Ausgestaltung kann abweichend von der Ausführungsform gemäß Fig. 14 die Vibrationseinrichtung 22 direkt am Träger 93 der Steuereinheit 90 angebracht sein. Diese Ausgestaltung hätte einerseits Schwingungen auch im Griffbereich zur Folge, wobei jedoch andererseits in vorteilhafter Weise auf Versorgungsleitungen zwischen Vibrationseinrichtung 22 und Steuereinheit 90 verzichtet werden könnte.

Bevorzugt ist die Positionierung der Vibrationseinrichtung 22 in der Nähe des Zahnbürstenkopfes gemäß Fig. 14, wobei der Vibrationsdämpfungsbereich 32 Schwingungen im Griffbereich der Zahnbürste verhindert.

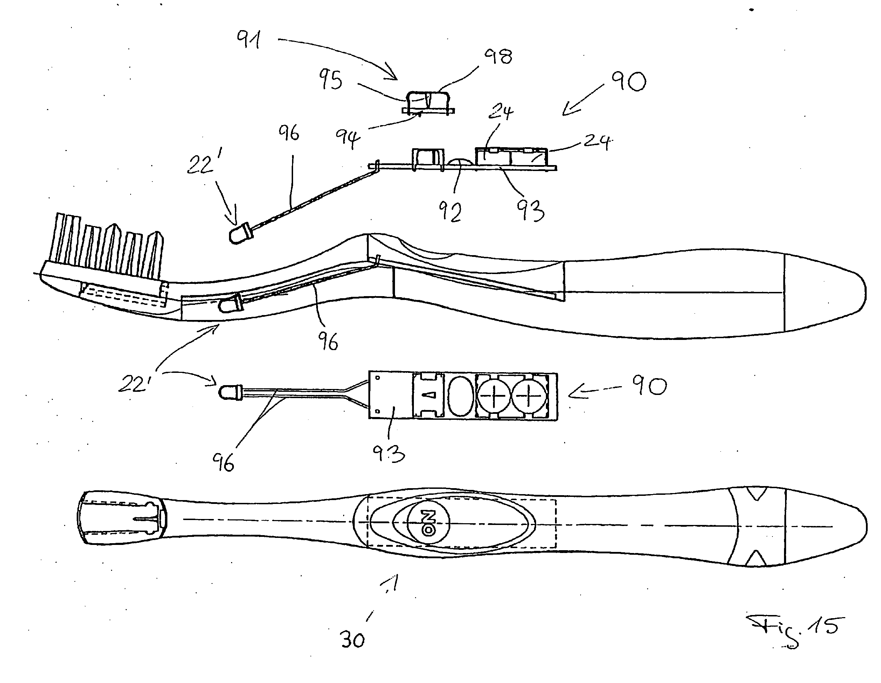

Die in Fig. 15 gezeigte weitere alternative Ausführungsform einer erfindungsgemäßen Zahnbürste entspricht im Wesentlichen der Ausführungsform von Fig. 14 mit dem einen Unterschied, dass anstelle einer Vibrationseinrichtung 22 eine andere Funktionseinheit mit der Steuereinheit 90 verbunden ist, nämlich eine Beleuchtungseinrichtung 22' in Form einer LED oder einer Leuchtbirne. Es sei an dieser Stelle ausdrücklich darauf hingewiesen, dass die Beleuchtungseinrichtung 22' gemäß Fig. 15 lediglich ein bevorzugtes Beispiel für eine weitere Funktionseinheit darstellt und die Funktionseinheit alternativ auch in Form eines für den jeweils gewünschten Anwendungszweck ausgebildeten Sensors vorgesehen sein kann.

Bei der mit einer Weichkomponente umspritzten Lichtquelle 22' kann es sich um eine nach Bedarf ein- und ausschaltbare, im eingeschalteten Zustand permanent aktive Lichtquelle zur Ausleuchtung der Mundhöhle handeln. Alternativ kann die Lichtquelle 22' als ein Zeitglied eingesetzt werden, das nach dem Einschalten für einen Zeitraum von beispielsweise zwei Minuten blinkt und anschließend automatisch ausgeschaltet wird. Eine alternative oder zusätzliche Funktion kann darin bestehen, die Lichtquelle 22' als ein Anzeigemittel zu verwenden, mit welchem der Benutzer über das Ende der Lebensdauer der Zahnbürste informiert wird, indem beispielsweise nach einer vorgegebenen Anzahl von z.B. 200 Einschaltvorgängen die Lichtquelle 22' z.B. überhaupt nicht mehr leuchtet, mit einer geänderten Blinkfrequenz betrieben wird oder permanent leuchtet, d.h. das Ende der Lebensdauer durch eine gegenüber dem Normalzustand geänderte Betriebsart der Lichtquelle 22' angezeigt wird.

Wie bei der Ausführungsform gemäß Fig. 14 sind alle elektrischen Komponenten mit dem Träger 93 verbunden, der nach dem Spritzen der den Grundkörper bildenden Hartkomponente der Zahnbürste mittels Verankerungen auf dem Grundkörper fixiert wird.

Abweichend von der Darstellung in Fig. 15 kann die Lichtquelle 22' direkt am Träger 93 angebracht sein. Der den Schaltweg für das Schaltelement 95 darstellende Spalt zwischen dem freien Ende des Schaltelementes 95 und dem Gegenkontakt 94 beträgt vorzugsweise weniger als 5 mm. Die Materialstärke der das Schaltelement 95 tragenden Halterung 98, die vorzugsweise aus Metall, z.B. Federstahl, Messing oder Kupfer, hergestellt ist, weist vorzugsweise eine Materialstärke von wenigstens 0,5 mm auf, um Verformungen aufgrund des Spritzdruckes zu verhindern.

Die Batterien 24 werden bevorzugt auf der Trägerplatte 93 durch Punktschweißen verankert, so dass beim Spritzen der Weichkomponente der elektrische Kontakt zwischen den Batterien 24 und der Trägerplatte 93 sicher bestehen bleibt. In Abhängigkeit von den jeweils benötigten Strom/Spannungswerten können eine oder mehrere Batterien 24 parallel oder seriell angebracht werden.

Die integrierte Schaltung 92 ist bevorzugt durch eine Harzschicht abgedeckt, um einen Schutz gegen die Hitze und den Druck beim Spritzen der von einem gummibeziehungsweise weichelastischen Material gebildeten Weichkomponente zu schaffen.

Die vorstehenden Ausführungen betreffend die Steuereinheit 90 gelten entsprechend für die Steuereinheit 90 der in Fig. 14 dargestellten, eine Vibrationseinrichtung 22 anstelle eine Lichtquelle 22' umfassenden Ausführungsform.

Bei Verwendung einer Lichtquelle 22' als Funktionseinheit ist es bevorzugt, dass als Weichkomponente ein transparentes oder transluzentes gummi- bzw. weichelastisches Material verwendet wird, welches die von der Strahlungsquelle 22' emittierte Strahlung möglichst ungehindert passieren lässt.

Wie ein Vergleich der Fig. 14 und 15 zeigt, besteht ein Unterschied zwischen den beiden erfindungsgemäßen Zahnbürsten darin, dass bei der Variante mit Lichtquelle 22' auf die Ausbildung eines Vibrationsdämpfungsbereiches 32, der bei der Variante mit Vibrationseinrichtung 22 im Bereich des Übergangs zwischen Griffbereich und Halsbereich der Zahnbürste vorgesehen ist, verzichtet worden ist.

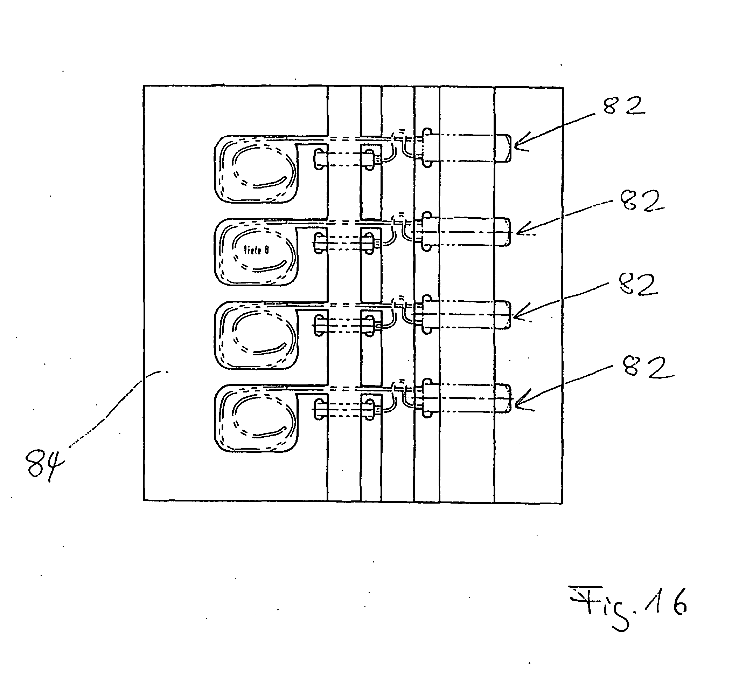

Fig. 16 zeigt ein Beispiel für ein Bestückungspalett 84, das bei der weitgehend automatisierten Herstellung der erfindungsgemäßen Zahnbürste eingesetzt wird. Mittels dieses Paletts 84 werden die vorkonfektionierten Baugruppen 82 (vgl. insbesondere Fig. 12b) derart angeliefert, dass die Baugruppen 82 den im Palett 84 vorgesehenen Vertiefungen problemlos mittels eines Automaten entnommen werden können.

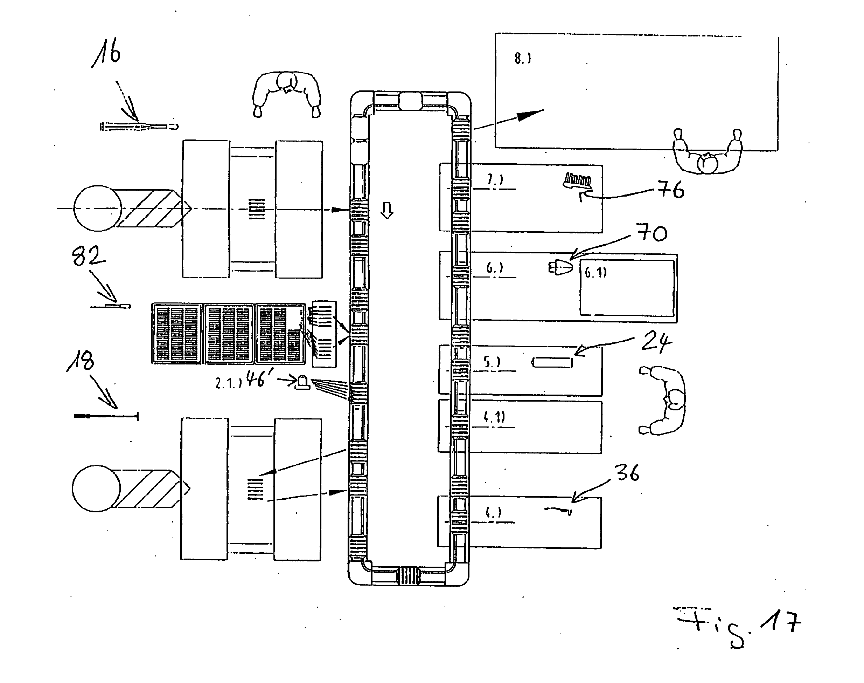

Fig. 17 zeigt lediglich schematisch eine Draufsicht auf eine zur erfindungsgemäßen Herstellung der gemäß der Erfindung ausgebildeten Zahnbürste dienende Montageanlage, mit der eine weitgehend automatische Handhabung sowie Montage der einzelnen Komponenten und Bauteile erfolgen kann. Dabei kann sowohl eine Rundtisch- als auch eine Transferanlagenanordnung vorgesehen sein. Zum Einsatz kommen zwei oder mehrere Spritzgiessmaschinen, die vorzugsweise zum Spritzen der Hartkomponente und/oder der Weichkomponente des Zahnbürstenkörpers mit Vertikalaggregaten versehen sind.

In einer bevorzugten Ausgestaltung ist die Rundtisch- bzw. Transferanlagenanordnung 1- oder 2-fach vorgesehen, während die Spritzgiessmaschinen 4-, 6- oder 8-fach vorgesehen sind, da die für das Spritzen benötigte Zykluszeit höher ist als die Taktzeit der Rundtisch- bzw. Transferanlagenanordnung.

Die Herstellungsschritte sind gemäß Fig. 17 die folgenden, wobei - abgesehen von der Verwendung des separaten Kontaktstiftes 46' anstelle des vormontierten Kontaktstiftes 46 - die hier verwendete Nummerierung auch der in den Fig. 1 - 8 angegebenen Herstellungsschritt-Nummerierung entspricht:
1. Spritzen der Hartkomponente 16
2. Einlegen der vorkonfektionierten Baugruppe 82 in die Hartkomponente 16
2.1 Einpressen des Kontaktstiftes 46'
3. Spritzen der Weichkomponente 18
4. Montage des Schaltelementes (Frosch) 36
4.1 Funktionskontrolle
5. Montage der Batterie 24
5.1 Vormontage des Verschlussdeckels 70
6. Montage des Verschlussdeckels 70
7. Montage des vorgefertigten Bürstenkopfes 76
8. Verpacken

Abweichend von der anhand von Fig. 17 beschriebenen Vorgehensweise kann insbesondere in Abhängigkeit von der konkreten Ausgestaltung der Zahnbürste auch eine andere Reihenfolge der Herstellungsschritte vorgesehen sein. Ferner können einzelne dieser Herstellungsschritte entfallen, was insbesondere bei der anhand von Fig. 14 und 15 beschriebenen Wegwerfvariante der Fall ist, bei welcher z.B. der oben aufgeführte Schritt 5 des Einsetzens der Batterie wegfällt.

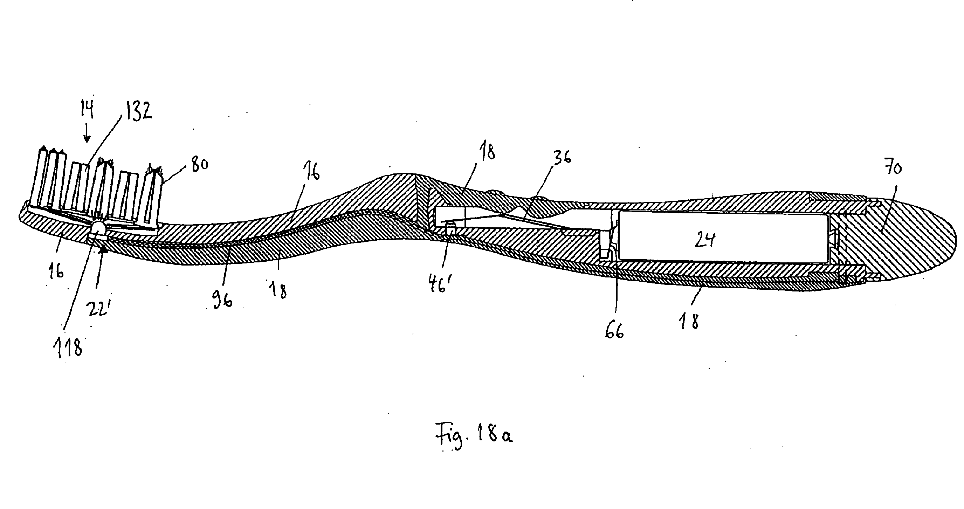

Fig. 18a-d zeigen weitere Varianten einer erfindungsgemässen Zahnbürste bzw. ihres Kopfteils mit einer Beleuchtungseinrichtung 22'. Aufbau und Funktion der Zahnbürste entsprechen dem Beispiel aus Fig. 15 mit dem Unterschied, dass das Leuchtmittel 118 (z.B. LED oder Leuchtbirne) im Kopfbereich 14 platziert ist. Die Anordnung des Leuchtmittels 118 und die optischen Eigenschaften der Weich- und Hartkomponente sowie gegebenenfalls der Borsten können variiert werden, um verschiedene Lichtverteilungen zu realisieren. Das optische Funktionselement wird vorzugsweise so platziert, dass dessen Leuchtrichtung zwischen 45° und 90° vom Bürstenkopf 14 abstrahlt und etwa auf dem Schwerpunkt der beborsteten Fläche liegt. Werden mehrere optische Elemente 118 eingesetzt, sind diese vorzugsweise ebenfalls so verteilt, dass die Bürstenkopfoberfläche gleichmässig beleuchtet wird.

Bei in Fig. 18a und vergrössert in Fig. 18b gezeigten Beispiel ist die Hartkomponente 16 und die Weichkomponente 18 weitgehend lichtundurchlässig, der Borstenträger 120 und die Borsten 80 jedoch zumindest teilweise transparent. Das Leuchtmittel 118 befindet sich in einem Abstand von vorzugsweise weniger als 2 mm unterhalb des Borstenträgers 120 in einem Hohlraum 126. Dadurch wird eine gleichmässige Lichtverteilung realisiert.

Besonders geeignet ist ein Bürstenkopf, der mit dem AFT Verfahren (Anchor Free Tufting) hergestellt ist. Dabei werden einzelne Borsten oder Borstenbündel durch Löcher im Borstenträger geführt und auf dessen Rückseite angeschmolzen. Die Borstenschmelze 122 verteilt das Licht gleichmässig bis in die Borstenspitzen 124, so dass die Borsten Lichtleiterfunktion übernehmen. Optional vorhandene weichelastische Reinigungselemente 132 können ebenfalls zur Lichtleitung dienen.

Fig. 18c zeigt eine Zahnbürste, bei der das Leuchtmittel 118 zusätzlich an der Rückseite 15 des Kopfteils 14 abstrahlt. In diesem Fall ist das Leuchtmittel 118 nur partiell von der weichelastischen Komponente 18 umspritzt. Eine Lichtdurchlässige Öffnung 128 auf der Bürstenkopfrückseite kann zur Behandlung mit Licht des Zahnfleisches und der Mundhöhle eingesetzt werden. Mit dieser Option kann die Lichtquelle unmittelbar auf der zu behandelnden Stelle aufgelegt werden. Das Licht kann somit seine volle optische Wirkung in der Mundhöhle entfalten. Die elastische Weichkomponente dichtet den Hohlraum 126 und die Öffnung 128 unterhalb des Borstenträgers 120 ab.

Beim Beispiel aus Fig. 18d ist das Leuchtmittel 118 an der Bürstenkopfrückseite 15 nur mit einer dünnen Schicht aus weichelastischem Material 18 überzogen. Das in diese Richtung abgestrahlte Licht nimmt daher die Farbe der bevorzugt wenigstens teilweise transparenten Weichkomponente 18 an.

Bei den Zahnbürsten gemäss Fig. 18c und 18d handelt es sich um Bürsten mit einem Wechselkopf (nicht schraffierter Teil).

Einsatzmöglichkeiten von Zahnbürsten mit optischen Funktionseinheiten sind z.B. eine antibakterielle Wirkung, Lichttherapie, oder die Bekämpfung von Aften etc. Insbesondere für den Einsatz der Lichttherapie können optische Funktionselemente eingesetzt werden, welche ihre Farbe ändern können. Des weiteren können auch Zahnbürsten hergestellt werden, welche durch farbiges Leuchten oder Blinken insbesondere Kindern einen besonderen Spass am Zähneputzen vermitteln. Im letzteren Aspekt ist auch eine Kombination mit dem weiter unten beschriebenen Sensor denkbar, z.B. Blinken nur bei Ausführen einer Putzbewegung.

Falls ein separat hergestellter Borstenträger 120 zum Einsatz kommt, sollte dessen Hartkomponente wenigstens teilweise lichtdurchlässig sein. Durch eine entsprechende farbliche Tönung können verschiedene Bürstenköpfe verschiedene Farben mit der gleichen insbesondere weissen Lichtquelle erzeugen.

Transparente oder transluszente gummielastische Strukturen 132 oder Reinigungselemente auf dem Bürstenkopf können bevorzugt dazu eingesetzt werden, das Licht vom optischen Element an den vorgesehenen Einsatzort zu Leiten.

Fig. 19 zeigt ein Beispiel für eine Zahnbürste, die statt oder zusätzlich zu einem manuell zu betätigenden Schalter (hier nicht dargestellt) mit einem Bewegungs- oder Drucksensor 106 ausgestattet ist, der insbesondere als Überdrucksensor eingesetzt werden kann. Der Sensor 106 befindet sich zwischen Halsbereich 12 und Griffbereich 10, ist imstande, die Energieversorgung des Leuchtmittels oder eines akustischen Elements 114 zu unterbrechen oder herzustellen, und ersetzt somit das oben beschriebene Schaltelement 36. Der Sensor 106 umfasst eine Kontaktplatte 108 und eine Kontaktspitze 110, die jeweils mit einer Versorgungsleitung 42, 44 verbunden sind. Beide Kontaktelemente 108, 110 sind relativ zueinander beweglich und durch einen spitz in das Hartmaterial 16 hineinragenden elastischen Materialbereich 116, in den die Kontaktspitze 110 eingebettet ist, voneinander getrennt. Bei starkem Druck auf den Bürstenkopf 14 biegt sich der Halsbereich 12 gegenüber dem Griffbereich 10, und die Kontaktspitze 110 durchsticht den elastischen Materialbereich 116, so dass eine elektrisch leitfähige Verbindung hergestellt und der Stromkreis geschlossen wird. Das akustische Element 114 gibt somit einen Ton ab, wenn der Halsbereich eine bestimmte kritische Biegung erfährt. Die Leitung 44 ist hier direkt mit dem Träger 93 verbunden. Der Schalter wirkt in dieser Ausgestaltungsvariante als Überdrucksensor bezüglich dem Anpressdruck des Zahnbürstenkopfes gegenüber der Zahnbürste. Das akustische Element 114 ist hier nicht umspritzt, sondern wird wie der Frosch und die Batterie nach dem Spritzen der Weichkomponente montiert.

In Fig. 19 sind auch die weiter oben beschriebenen Elemente 130 dargestellt, die einen Anschlag für die Batterie 24 bilden, um ein Überdehnen der Feder 66 zu verhindern.

## Patentansprüche

1. Elektrische Zahnbürste mit einem einen Griffbereich (10), einen Kopfbereich (14) und einen zwischen dem Griffbereich (10) und dem Kopfbereich (14) gelegenen Halsbereich (12) umfassenden Körper (16, 18) und mit zumindest teilweise innerhalb des Körpers (16, 18) angeordneten Funktionsbauteilen, die eine elektrisch betriebene Funktionseinheit (20, 22, 22') in Form einer Vibrationseinrichtung (22) zur Erzeugung von Vibrationen, aufweisend einen Elektromotor (20) und einen von diesem antreibbaren Excenter (21), und eine einen Energiespeicher (24) aufweisende elektrische Versorgungseinrichtung (26) für die Funktionseinheit (22, 22') umfassen, bei dem
- der Körper (16, 18) aus zumindest einer als Festigkeitsträger dienenden Hartkomponente (16) sowie wenigstens einer Weichkomponente (18) im Spritzgiessverfahren hergestellt ist,
- der Körper (16, 18) an dessen Oberfläche mindestens einen Funktionsbereich (60) zur Dämpfung von Vibrationen aufweist, der mittels der Weichkomponente (18) gebildet ist, und
- der Funktionsbereich (60) auf der Rückseite des Halsbereiches (12) angeordnet ist.

2. Elektrische Zahnbürste mit einem einen Griffbereich (10), einen Kopfbereich (14) und einen zwischen dem Griffbereich (10) und dem Kopfbereich (14) gelegenen Halsbereich (12) umfassenden Körper (16, 18) und mit zumindest teilweise innerhalb des Körpers (16, 18) angeordneten Funktionsbauteilen, die eine elektrisch betriebene Funktionseinheit (20, 22, 22') in Form einer Vibrationseinrichtung (22) zur Erzeugung von Vibrationen, aufweisend einen Elektromotor (20) und einen von diesem antreibbaren Excenter (21), und eine einen Energiespeicher (24) aufweisende elektrische Versorgungseinrichtung (26) für die Funktionseinheit (22, 22') umfassen, bei dem
- der Körper (16, 18) aus zumindest einer als Festigkeitsträger dienenden Hartkomponente (16) sowie wenigstens einer Weichkomponente (18) im Spritzgiessverfahren hergestellt ist,
- der Körper (16, 18) an dessen Oberfläche mindestens einen Funktionsbereich (60) zur Dämpfung von Vibrationen aufweist, der mittels der Weichkomponente (18) gebildet ist, und
- der Funktionsbereich (60) auf der Rückseite des Griffbereiches (10) angeordnet ist.

3. Elektrische Zahnbürste nach Anspruch 1 oder 2,
**dadurch gekennzeichnet,**
**dass** wenigstens einige der Funktionsbauteile während der Herstellung des Körpers (16, 18) zumindest teilweise direkt mit dem die Weichkomponente (18) bildenden Kunststoff umspritzt worden sind.

4. Elektrische Zahnbürste nach Anspruch 3,
**dadurch gekennzeichnet,**
**dass** der Funktionsbereich (60) zur Vibrationsdämpfung mit einer Oberflächentextur in Form von sich wiederholenden Mustern ausgestattet ist.

5. Elektrische Zahnbürste nach Anspruch 4,
**dadurch gekennzeichnet,**
**dass** der Funktionsbereich (60) zur Vibrationsdämpfung mit Lamellen, kleinen Polstern oder einer netzförmigen Geometrie ausgestattet ist.

6. Elektrische Zahnbürste nach einem der Ansprüche 2 bis 5,
**dadurch gekennzeichnet,**
**dass** der Funktionsbereich (60) im Bereich des hinteren Endes des Griffbereichs (10) angeordnet ist.

7. Elektrische Zahnbürste nach einem der Ansprüche 1 bis 6,
**dadurch gekennzeichnet,**
**dass** der Funktionsbereich (60) zur Vibrationsdämpfung in einem auch als Schaltmembran bezeichneten Schaltbereich (30) um Schaltpunkte (86, 88) angeordnet ist.

8. Elektrische Zahnbürste nach einem der Ansprüche 1 bis 7,
**dadurch gekennzeichnet,**
**dass** weichelastische Reinigungs- und / oder Massageelemente am Bürstenkopf mittels der Weichkomponente (18) gebildet sind.

9. Elektrische Zahnbürste nach einem der Ansprüche 1 bis 8,
**dadurch gekennzeichnet,**
**dass** die Weichkomponente (18) eine Dichtungsfunktionen übernimmt und insbesondere der Ausformung einer Dichtlippe (64) für eine dichte Verbindung zwischen einem hinteren Ende des Körpers (16, 18) und einem dieses Ende verschliessenden Deckel (70) dient.

10. Elektrische Zahnbürste nach einem der Ansprüche 1 bis 9,
**dadurch gekennzeichnet,**
**dass** zur weiteren Vibrationsdämpfung Ausnehmungen (34) der Hartkomponente (16) im Halsbereich (12) mit der Weichkomponente (18) aufgefüllt sind.

11. Elektrische Zahnbürste nach einem der Ansprüche 1 bis 10,
**dadurch gekennzeichnet,**
**dass** die Shore-Härte A der Weichkomponente (18) unter 70, vorzugsweise unter 40 ist.

12. Elektrische Zahnbürste nach einem der Ansprüche 1 bis 11,
**dadurch gekennzeichnet,**
**dass** die Zahnbürste einen einzigen Anspritzpunkt, an welchem bei der Herstellung die Weichkomponente (18) angespritzt worden ist, aufweist, wobei die Weichkomponente (18) verschiedene Funktionen zur Dämpfung, Dichtung, einer Schaltmembrane und / oder eines weichelastischen Reinigungs- und Massageelements erfüllt.

13. Elektrische Zahnbürste nach einem der Ansprüche 1 bis 11,
**dadurch gekennzeichnet,**
**dass** die Zahnbürste mehrere Anspritzpunkte, an welchen bei der Herstellung die Weichkomponente (18) angespritzt worden ist, aufweist, wobei über die verschiedenen Anspritzpunkte verschiedene Funktionen mittels dem Weichmaterial (18) umgesetzt sind.

14. Elektrische Zahnbürste nach einem der Ansprüche 1 bis 13,
**dadurch gekennzeichnet,**
**dass** die Zahnbürste mit einem Wechselkopf ausgestattet ist.

15. Elektrische Zahnbürste nach einem der Ansprüche 1 bis 14,
**dadurch gekennzeichnet,**
**dass** der Kopfbereich (14) der Zahnbürste zu Schwingungen mit einer Frequenz von mehreren 1000 Hz, vorzugsweise 10000-20000 Hz, anregbar ist.

16. Elektrische Zahnbürste nach einem der Ansprüche 1 bis 15,
**dadurch gekennzeichnet,**
**dass** die Vibrationseinrichtung (22) in der Nähe des Kopfbereiches (14), insbesondere im Halsbereich (12) angeordnet ist.

17. Elektrische Zahnbürste nach einem der Ansprüche 1 bis 15,
**dadurch gekennzeichnet,**
**dass** die Vibrationseinrichtung (22) im Griffbereich (10), insbesondere direkt am Träger (93) einer Steuereinheit (90) angeordnet ist.

18. Verfahren zur Herstellung einer Zahnbürste mit einem einen Griffbereich (10), einen Kopfbereich (14) und einen zwischen dem Griffbereich (10) und dem Kopfbereich (14) gelegenen Halsbereich (12) umfassenden Körper (16, 18) und mit zumindest teilweise innerhalb des Körpers (16, 18) angeordneten Funktionsbauteilen, die eine elektrisch betriebene Funktionseinheit (22, 22') und eine einen Energiespeicher (24) aufweisende elektrische Versorgungseinrichtung (26) für die Funktionseinheit (22, 22') umfassen, bei dem
- der Körper aus zumindest einer als Festigkeitsträger dienenden Hartkomponente (16) sowie wenigstens einer Weichkomponente (18) im Spritzgiessverfahren hergestellt wird, und
- wenigstens einige der Funktionsbauteile während der Herstellung des Körpers (16, 18) zumindest teilweise direkt mit dem die Weichkomponente (18) bildenden Kunststoff umspritzt werden.

19. Verfahren nach Anspruch 18,
**dadurch gekennzeichnet,**
**dass** die Funktionsbauteile im Bereich der Grenzzone zwischen der Hartkomponente (16) und der Weichkomponente (18) angeordnet werden.

20. Verfahren nach Anspruch 18 oder 19,
**dadurch gekennzeichnet,**
**dass** als Funktionseinheit eine einen elektrischen Antrieb (20) aufweisende Vibrationseinrichtung (22) zur Erzeugung von Vibrationen im Kopfbereich (14) umspritzt wird.

21. Verfahren nach Anspruch 18 oder 19,
**dadurch gekennzeichnet,**
**dass** als Funktionseinheit eine wenigstens eine Lichtquelle, bevorzugt eine LED, aufweisende Beleuchtungseinrichtung (22') umspritzt wird.

22. Verfahren nach einem der Ansprüche 18 bis 21,
**dadurch gekennzeichnet,**
**dass** zunächst eine erste Komponente (16) ohne Funktionsbauteile gespritzt wird und daraufhin zumindest einige Funktionsbauteile an der ersten Komponente (16) positioniert und fixiert werden, wobei anschließend die Einheit aus erster Komponente (16) und Funktionsbauteilen mit zumindest einer weiteren Komponente (18) zumindest teilweise umspritzt wird.

23. Verfahren nach einem der Ansprüche 18 bis 21,
**dadurch gekennzeichnet,**
**dass** vor dem Spritzen einer ersten Komponente (16) zumindest einige Funktionsbauteile in einem Spritzgiesswerkzeug positioniert und daraufhin mit der ersten Komponente (16) umspritzt werden, wobei anschließend die Einheit aus erster Komponente (16) und umspritzten Funktionsbauteilen mit zumindest einer weiteren Komponente (18) umspritzt wird.

24. Verfahren nach einem der Ansprüche 18 bis 23,
**dadurch gekennzeichnet,**
**dass** zumindest bei einer Komponente (16, 18) zunächst in einem ersten Schritt bei niedrigem Spritzdruck eine Überdeckung der Funktionsbauteile gebildet und anschließend in wenigstens einem weiteren Schritt die Komponente (16, 18) bei hohem Spritzdruck vervollständigt wird.

25. Verfahren nach einem der Ansprüche 18 bis 24,
**dadurch gekennzeichnet,**
**dass** zumindest einige Funktionsbauteile derart an einer bereits gespritzten Kunststoffkomponente (16), insbesondere einer Hartkomponente, angeordnet werden, dass sich die Funktionsbauteile bezogen auf die Strömungsrichtung einer noch zu spritzenden weiteren Kunststoffkomponente (18), insbesondere einer Weichkomponente, zumindest bereichsweise im Schatten wenigstens eines schützenden Abschnitts der Hartkomponente (16) befinden.

26. Verfahren nach einem der Ansprüche 18 bis 25,
**dadurch gekennzeichnet,**
**dass** ein Funktionsbauteil oder eine Baugruppe (82) von Funktionsbauteilen umspritzt wird, dass bzw. die sich über einen wesentlichen Teil der Länge des Körpers (16, 18) erstreckt.

27. Verfahren nach einem der Ansprüche 18 bis 27,
**dadurch gekennzeichnet,**
**dass** zumindest eine Komponente (16) beim Spritzen mit einem Halte- oder Fixierbereich (34) für eine oder mehrere elektrische Leitungen (42, 44) versehen wird, wobei bevorzugt der Halte- oder Fixierbereich in Form einer Labyrinthausnehmung ausgebildet wird.

28. Verfahren nach einem der Ansprüche 18 bis 27,
**dadurch gekennzeichnet,**
**dass** vor dem Spritzen einer weiteren Komponente (18) an der Einheit aus zumindest einer ersten Komponente (16) und zu umspritzenden Funktionsbauteilen wenigstens ein weiteres zu umspritzendes Funktionsbauteil (46, 46', 48) fixiert wird, insbesondere ein Kontaktelement zur Herstellung einer elektrischen Verbindung zwischen Funktionsbauteilen.

29. Verfahren nach einem der Ansprüche 18 bis 28,
**dadurch gekennzeichnet,**
**dass** wenigstens ein für ein oder mehrere später einzusetzende Funktionsbauteile vorgesehener Hohlraum (29) einer ersten Komponente (16) durch wenigstens ein mit der ersten Komponente (16) umspritztes und/oder mit wenigstens einer weiteren Komponente (18) zu umspritzendes Funktionsbauteil (46, 46') gegenüber einer weiteren Komponente (18) abgedichtet wird.

30. Verfahren nach einem der Ansprüche 18 bis 29,
**dadurch gekennzeichnet,**
**dass** durch Spritzen einer Weichkomponente (18) ein zum Betätigen wenigstens eines elektrischen Funktionsbauteils (36) in einen Hohlraum (28) einer zuvor gespritzten Hartkomponente (16) eindrückbarer Betätigungsbereich (30) ausgebildet wird, insbesondere ein Schaltbereich zum Beaufschlagen eines Schaltelementes zum Ein- und Ausschalten der Zahnbürste.

31. Verfahren nach einem der Ansprüche 18 bis 30,
**dadurch gekennzeichnet,**
**dass** ein insbesondere im Halsbereich (12) oder im Bereich des Übergangs zwischen Halsbereich (12) und Griffbereich (10) gelegener Vibrationsdämpfungsbereich (32) des Körpers aus wenigstens zwei unterschiedlichen Spritzgiesskomponenten (16, 18) gebildet wird.

32. Verfahren nach Anspruch 31,
**dadurch gekennzeichnet,**
**dass** zur Bildung des Vibrationsdämpfungsbereiches (32) zunächst beim Spritzen einer Hartkomponente (16) diese mit einem Muster von Ausnehmungen (34) hergestellt wird und anschließend beim Spritzen wenigstens einer weiteren Komponente (18), insbesondere einer Weichkomponente, mit dieser die Ausnehmungen (34) gefüllt werden.

33. Zahnbürste mit einem einen Griffbereich (10), einen Kopfbereich (14) und einen zwischen dem Griffbereich (10) und dem Kopfbereich (14) gelegenen Halsbereich (12) umfassenden Körper (16, 18) und mit zumindest teilweise innerhalb des Körpers (16, 18) angeordneten Funktionsbauteilen, die eine elektrisch betriebene Funktionseinheit (22, 22') und eine einen Energiespeicher (24) aufweisende elektrische Versorgungseinrichtung (26) für die Funktionseinheit (22, 22') umfassen, wobei der Körper aus zumindest einer im Spritzgiessverfahren hergestellten und als Festigkeitsträger dienenden Hartkomponente (16) sowie wenigstens einer im Spritzgiessverfahren hergestellten Weichkomponente (18) besteht, und wobei wenigstens einige der Funktionsbauteile zumindest teilweise direkt mit dem die Weichkomponente (18) bildenden Kunststoff umspritzt sind.

34. Zahnbürste nach Anspruch 33,
**dadurch gekennzeichnet,**
**dass** eine elektrische Verbindung zwischen einer im Kopfbereich (14) oder im Halsbereich (12) angeordneten Funktionseinheit (22) einerseits und einen im Griffbereich (10) angeordneten Energiespeicher (24) andererseits über ein bistabiles und durch Beaufschlagen an zwei auf gegenüberliegenden Seiten eines Gelenkbereiches (38) gelegenen Schenkeln (40, 42) zwischen zwei formstabilen Zuständen umsteuerbares Schaltelement (36) herstellbar bzw. unterbrechbar ist.

35. Zahnbürste nach Anspruch 33 oder 34,
**dadurch gekennzeichnet,**
**dass** sie durch ein Verfahren nach einem der Ansprüche 18 bis 32 hergestellt ist.
